# EUROPÄISCHE PATENTSCHRIFT

(11) **EP 0 486 429 B1**
(45) Veröffentlichungstag und Bekanntmachung des Hinweises auf die Patenterteilung: **09.10.1996**
(21) Anmeldenummer: 91810856.4
(22) Anmeldetag: 05.11.1991
(51) Int. Cl.: C09B 19/02

(54) **Triphendioxazinverbindungen, Verfahren zu ihrer Herstellung und ihre Verwendung**
Triphenedioxazine compounds, their preparation process and their use
Composés, triphènedioxazine, leur procédé de fabrication et leur utilisation

(30) Priorität: 13.11.1990 CH 3586/90
(43) Veröffentlichungstag der Anmeldung: 20.05.1992
(73) Patentinhaber: CIBA-GEIGY AG, 4002 Basel (CH)
(72) Erfinder: Lauk, Urs, Dr., CH-8047 Zürich (CH)

(56) Entgegenhaltungen:
- EP-A- 0 124 971
- EP-A- 0 361 186
- GB-A- 781 384
- US-A- 2 336 520

## Beschreibung

Die vorliegende Erfindung betrifft neue Triphendioxazinverbindungen, Verfahren zu ihrer Herstellung sowie ihre Verwendung zum Färben und Bedrucken von Fasermaterialien, insbesondere von textilen Fasermaterialien.

Gegenstand der vorliegenden Erfindung sind somit Verbindungen der Formel 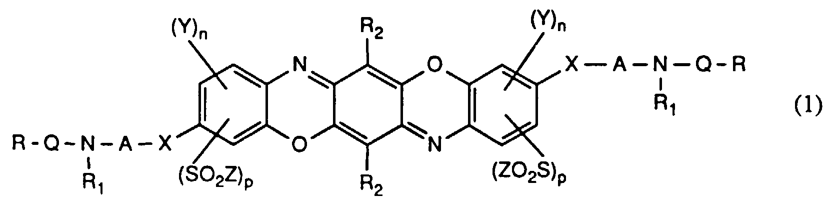 worin
A für einen gegebenenfalls substituierten Alkylen-, Cycloalkylen-, Arylen- oder Aralkylenrest steht,
X -O-, -S- oder -NR₃-, worin R₃ Wasserstoff oder ein gegebenenfalls substituierter Alkyl-, Cycloalkyl-, Aryl-, Aralkyl- oder heterocyclischer Rest ist, bedeutet,
Y Halogen, C₁-C₄-Alkyl, C₁-C₄-Alkoxy, Sulfo oder Carboxy darstellt,
n für die Zahl 0 oder 1 steht,
Z Hydroxy oder gegebenenfalls substituiertes Alkyl, Aryl oder Aralkyl bedeutet, p für die Zahl 0 oder 1 steht,
R₂ Chlor oder Brom ist,
R und R₁ unabhängig voneinander je Wasserstoff oder einen gegebenenfalls substituierten Alkyl-, Cycloalkyl-, Aralkyl-, Aryl- oder heterocyclischen Rest bedeuten,
Q eine funktionelle Gruppe der Formel 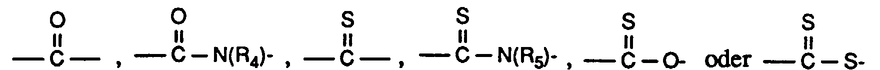 darstellt,
R₄ ein gegebenenfalls substituierter Alkyl-, Cycloalkyl-, Aralkyl-, Aryl- oder heterocyclischer Rest ist und R₅ Wasserstoff ist oder unabhängig die Bedeutung von R₄ hat, oder worin die Reste -N(R₄)- und/oder -N(R₅)- unabhängig voneinander je einen bivalenten 5- bis 7-gliedrigen aliphatischen Heterocyclus darstellen, mit der Massgabe, dass R nicht Methyl, β-Carboxyethyl, Phenyl, 2-Carboxyphenyl oder 3,4,5,6-Tetrachloro-2-carboxyphenyl ist, wenn Q eine Gruppe der Formel 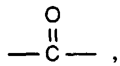 R₁ Wasserstoff, X -NR₃- und A 1,2-Ethylen, 1,3-Propylen, 1,4-Butylen, Cyclopentylen oder Cyclohexylen bedeuten.

Bei R, R₁, R₃, R₄, R₅ und Z als gegebenenfalls substituiertem Alkylrest handelt es sich z.B. um einen gegebenenfalls substituierten C₁-C₆-Alkylrest. Beispiele sind ein Methyl-, Ethyl-, n- oder iso-Propyl- oder n-, iso-, sec- oder tert.-Butylrest oder ein geradkettiger oder verzweigter Pentyl- oder Hexylrest, der z.B durch C₁-C₄-Alkoxy, womit hier und im weiteren generell Methoxy, Ethoxy, n- oder iso-Propoxy oder n-, iso-, sec.- oder tert.-Butoxy umfasst ist; Hydroxy; Sulfo; Sulfato; Carboxy; Cyano; Halogen, worunter hier und im weiteren generell z.B. Fluor, Brom und insbesondere Chlor zu verstehen ist; C₂-C₅-Alkoxycarbonyl, z.B. Methoxy- oder Ethoxycarbonyl; C₂-C₅-Alkanoyloxy, z.B. Acetoxy, Propionyloxy; oder Carbamoyl substituiert und/oder mit Ausnahme von Methyl gegebenenfalls durch eine Gruppe -O-, -S- oder -NH- unterbrochen sein kann.

Beispiele für geeignete Alkylreste R, R₁, R₃, R₄, R₅ und Z sind somit Methyl, Ethyl, n-Propyl, iso-Propyl, n-, iso-, sec.- oder tert.-Butyl, β-Chlorethyl, β-Hydroxyethyl, β-Hydroxybutyl, β-Cyanethyl, Sulfomethyl, β--Sulfoethyl, β-Sulfatoethyl, β-Acetoxyethyl, β-Sulfatopropyl, Υ-Sulfatopropyl oder der Rest der Formel -CH₂CH₂OCH₂CH₂OH, -CH₂CH₂NHCH₂CH₂OH oder -CH₂CH₂OCH₂CH₂OSO₃H.

R, R₁, R₃, R₄, R₅ und Z stehen als Alkylrest unabhängig voneinander bevorzugt je für einen unsubstituierten oder z.B. durch Hydroxy, Sulfo, Sulfato, Chlor, Cyano oder Acetoxy substituierten und/oder mit Ausnahme von Methyl gegebenenfalls durch eine Gruppe -O- unterbrochenen C₁-C₄-Alkylrest.

Besonders bevorzugt ist für R, R₁, R₃, R₄, R₅ und Z als Alkyl unabhängig voneinander je die Bedeutung eines unsubstituierten oder durch Hydroxy oder Sulfato substituierten C₁-C₄-Alkylrestes, und sind insbesondere die Bedeutungen Methyl und Ethyl.

Bei R, R₁, R₃, R₄ und R₅ als gegebenenfalls substituiertem Cycloalkyl handelt es sich z.B. um gegebenenfalls substituiertes C₅-C₉-Cycloalkyl und vorzugsweise um Cyclopentyl oder Cyclohexyl, welches unsubstituiert oder z.B. durch C₁-C₄-Alkyl, womit hier und im weiteren generell Methyl, Ethyl, n- oder iso-Propyl oder n-, iso-, sec.- oder tert.-Butyl umfasst ist, Amino, C₂-C₅-Alkanoylamino, z.B. Acetylamino oder n-Propionylamino, oder Benzoylamino substituiert ist.

R, R₁, R₃, R₄ und R₅ stehen als Cycloalkyl unabhängig voneinander besonders bevorzugt je für unsubstituiertes oder durch 1 bis 3 Methylgruppen substituiertes Cyclopentyl oder Cyclohexyl und insbesondere bevorzugt für Cyclohexyl.

Stehen R, R₁, R₃, R₄, R₅ und Z für Aryl, handelt es sich z.B. um unsubstituiertes oder z.B. durch Sulfo, Nitro, Halogen, Cyano, C₁-C₄-Alkyl, C₁-C₄-Alkoxy, Hydroxy, Phenoxy, Amino, N-Mono- oder N,N-Di-C₁-C₄-Alkylamino, C₂-C₅-Alkanoylamino, Benzoylamino, C₁-C₄-Alkoxycarbonyl, Carbamoyl, Sulfamoyl und/oder C₁-C₄-Alkylsulfonyl substituiertes Phenyl oder Naphthyl.

Vorzugsweise stehen R, R₁, R₃, R₄, R₅ und Z als Aryl unabhängig voneinander je für unsubstituiertes oder durch Sulfo, Nitro, Fluor, Chlor, Methyl, Methoxy, N-Methyl- oder N-Ethylamino, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl oder für unsubstituiertes oder durch Sulfo, Nitro und/oder Chlor substituiertes 1-oder 2-Naphthyl.

Besonders bevorzugt ist für R, R₁, R₃, R₄, R₅ und Z als Aryl unabhängig voneinander je die Bedeutung eines unsubstituierten oder durch Sulfo, Fluor, Chlor, Methyl und/oder Methoxy substituierten Phenylrestes oder eines unsubstituierten oder durch Sulfo substituierten 1- oder 2-Naphthylrestes.

Bei R, R₁, R₃, R₄, R₅ und Z als Aralkylrest handelt es sich z.B. um einen gegebenenfalls substituierten C₇-C₁₂-Aralkylrest und bevorzugt um einen Benzyl- oder Phenylethylrest, der gegebenenfalls z.B. durch C₁-C₄-Alkyl, Sulfo, Nitro, Halogen oder C₁-C₄-Alkoxy weitersubstituiert sein kann. R, R₁, R₃, R₄, R₅ und Z stehen als Aralkylrest unabhängig voneinander besonders bevorzugt je für unsubstituiertes oder z.B. durch Methyl, Sulfo, Fluor, Chlor und/oder Methoxy substituiertes Benzyl und stellen insbesondere bevorzugt je den Benzylrest dar.

Als heterocyclische Reste kommen für R, R₁, R₃, R₄ und R₅ z.B. Thiophenyl, Furyl oder Pyridinyl in Betracht, welche gegebenenfalls noch 1 oder 2 Substituenten ausgewählt aus der Gruppe Sulfo, Carboxy, Sulfamoyl, Carbamoyl, Methyl, Ethyl, Methoxy, Ethoxy, Nitro, Fluor, Chlor, Amino, N-Methyl- und N-Ethylamino, N,N-Dimethyl- und N,N-Diethylamino und Phenylamino tragen können.

Stehen die Reste -N(R₄)- und/oder -N(R₅)- für einen bivalenten aliphatischen Heterocyclus, so kann es sich dabei z.B. um einen Rest der Formel 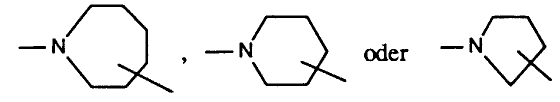 handeln-R, R₁, R₃ und R₅ stehen unabhängig voneinander vorzugsweise für Wasserstoff, unsubstituiertes oder durch Hydroxy, Sulfo, Sulfato, Chlor, Cyano, oder Acetoxy substituiertes und/oder mit Ausnahme von Methyl gegebenenfalls durch eine Gruppe -O- unterbrochenes C₁-C₄-Alkyl, unsubstituiertes oder durch 1 bis 3 Methylgruppen substituiertes Cyclopentyl oder Cyclohexyl, unsubstituiertes oder durch Sulfo, Nitro, Fluor, Chlor, Methyl, Methoxy, N-Methyl- oder N-Ethylamino, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Sulfo, Nitro und/oder Chlor substituiertes 1- oder 2-Naphthyl oder für unsubstituiertes oder durch Methyl, Methoxy, Sulfo, Fluor und/oder Chlor substituiertes Benzyl, Thiophenyl, Furyl oder Pyridinyl.

R, R₁, R₃ und R₅ bedeuten unabhängig voneinander besonders bevorzugt je Wasserstoff, unsubstituiertes oder durch Hydroxy oder Sulfato substituiertes C₁-C₄-Alkyl, Cyclohexyl, unsubstituiertes oder durch Sulfo, Fluor, Chlor, Methyl und/oder Methoxy substituiertes Phenyl oder Benzyl, unsubstituiertes oder durch Sulfo substituiertes 1- oder 2-Naphthyl, Thiophenyl, Furyl oder Pyridinyl, und insbesondere bevorzugt Wasserstoff, Methyl oder Ethyl. In einer besonders bevorzugten Ausführungsform der Erfindung stehen R₁, R₃ und R₅ je für Wasserstoff.

R₄ steht bevorzugt für C₁-C₄-Alkyl, Cyclohexyl oder für unsubstituiertes oder durch Sulfo, Chlor, Methyl und/oder Methoxy substiutiertes Phenyl oder Benzyl und besonders bevorzugt für Methyl, Ethyl, Phenyl oder Benzyl.

Z bedeutet bevorzugt Hydroxy oder C₁-C₄-Alkyl, besonders bevorzugt Hydroxy, Methyl oder Ethyl und insbesondere bevorzugt Hydroxy.

p steht bevorzugt für die Zahl 1.

Bei A als gegebenenfalls substituiertem Alkylenrest handelt es sich z.B. um einen gegebenenfalls substituierten C₂-C₆-Alkylenrest und bevorzugt um einen unsubstituierten oder z.B. durch Hydroxy, Sulfo, Sulfato, C₁-C₄-Alkoxy, Carboxy, Cyano, Halogen, Phenyl, Sulfophenyl oder C₂-C₅-Alkoxycarbonyl substituierten und/oder gegebenenfalls durch 1-2 Gruppen -O-, -N(R₅)-, worin R₅ C₁-C₄-Alkyl, Acetyl oder insbesondere Wasserstoff bedeutet, -S-, -SO₂- oder einen cycloaliphatischen oder heterocyclisch-aliphatischen Rest unterbrochenen C₂-C₆-Alkylenrest.
Beispiele für geeignete Alkylenreste A sind 1,2-Ethylen, 1,2- und 1,3-Propylen, 1-Ethyl-1,2-ethylen, 2-Hydroxy-1,3-propylen, 2-Sulfato-1,3-propylen, 1- und 2-Phenyl-1,3-propylen, 2-(4'-Sulfophenyl)-1,3-propylen, 1,4-, 2,3- und 2,4-Butylen, 1,2-Dimethyl-1,2-ethylen, 1-Phenyl-1,2-ethylen, 2-Methyl-1,3-propylen, 2,2-Dimethyl- 1,3-propylen, 1-Chlor-2,3-propylen, 1,5- und 2,4-pentylen, 2-Methyl-2,4-pentylen, 1-Carboxy-1,5-pentylen, 2,3-Diphenyl-1,4-butylen, 1-Methoxycarbonyl-1,5-pentylen, 1,6 und 2,5-Hexylen, 2-Carboxy-1,3-propylen, 2-Methoxy-1,3-propylen, ein Rest der Formel -CH₂-CH₂-Q'-CH₂-CH₂-, worin Q'-O-, -S-, -SO₂-, -NH- oder -N(CH₃)- bedeutet oder ein
Rest der Formel

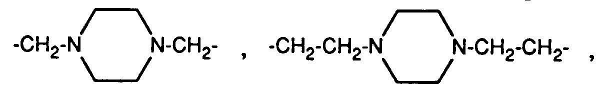

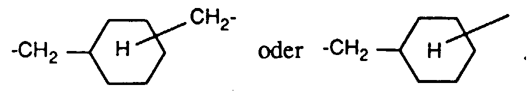

A steht als Alkylenrest besonders bevorzugt für einen unsubstituierten oder durch Hydroxy, Sulfo, Sulfato, Methoxy, Carboxy oder Sulfophenyl substituierten C₂-C₄-Alkylenrest und insbesondere bevorzugt für einen unsubstituierten oder durch Hydroxy oder Sulfato substituierten 1,2-Ethylen oder 1,2- oder 1,3-Propylenrest. In einer besonders bevorzugten Ausführungsform der Erfindung steht A für 1,2-Ethylen, 1,2- oder 1,3-Propylen oder für 2-Sulfato-1,3-propylen.

Bei A als gegebenenfalls substituiertem Cycloalkylen handelt es sich z.B. um gegebenenfalls substituiertes C₅-C₉-Cycloalkylen und bevorzugt um unsubstituiertes oder einfach oder mehrfach durch C₁-C₃-Alkyl substituiertes Cyclopentylen oder Cyclohexylen; besonders bevorzugt steht hierbei A für unsubstituiertes oder durch 1 bis 3 Methylgruppen substituiertes Cyclohexylen.

Beispiele für geeignete cycloaliphatische Reste A sind:
1,3- und 1,4-Cyclohexylen, 4-Methyl-1,3-cyclohexylen, 2-Methyl-1,3-cyclohexylen, 5,5-Dimethyl-1,3-cyclohexylen, 2-Methyl-1,4-cyclohexylen, 4,6-Dimethyl-1,3-cyclohexylen und 4-Methyl-1,2-cyclohexylen.

Bedeutet A einen gegebenenfalls substituierten Aralkylenrest, so kann die z.B. ein C₁-C₆-Alkylen-phenylen-, ein Phenylen-C₁-C₆-alkylen-phenylen-, ein C₁-C₃-Alkylenphenylen-C₁-C₃-alkylen- oder ein Methylen-naphthylen-methylenrest sein, wobei in diesen Aralkylenresten das Alkylen gegebenenfalls wie zuvor angegeben substituiert und/oder durch eine der zuvor genannten Heterogruppen unterbrochen sein kann und das Phenylen und Naphthylen gegebenenfalls noch 1 oder 2 Substituenten ausgewählt aus der Gruppe Sulfo, Carboxy, Sulfamoyl, Carbamoyl, Methyl, Ethyl, Methoxy, Ethoxy, Nitro, Chlor, Amino, N-Methyl- und N-Ethylamino, N,N-Dimethyl- und N,N-Diethylamino und Phenylamino tragen kann.

Beispiele für geeignete Aralkylenreste A sind

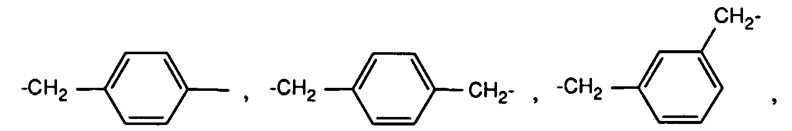

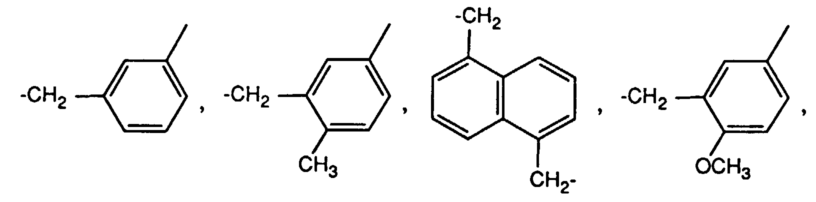

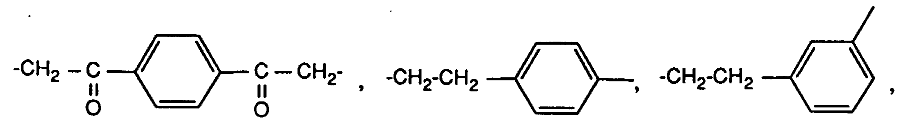

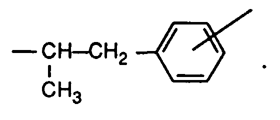

A stellt als Aralkylenrest bevorzugt einen C₁-C₃-Alkylen-phenylen- oder C₁-C₂-Alkylenphenylen-C₁-C₂-alkylenrest dar, der im Phenylteil unsubstituiert oder z.B. durch Methyl, Methoxy, Chlor oder Sulfo substituiert ist.

Steht A für einen bivalenten Arylrest, so kann dies z.B. ein unsubstituierter oder z.B. durch C₁-C₄-Alkyl, C₁-C₄-Alkoxy, Sulfo, Halogen oder Carboxy substituierter Phenylen-, Biphenylen oder Naphthylenrest sein.

Beispiele für Arylenreste A sind: 1,3- und 1,4-Phenylen, 2-Sulfo-1,4-phenylen, 2,5-Disulfo-1,4-phenylen, 4-Sulfo-1,3-phenylen, 2-Methyl-1,4-phenylen, 2-Carboxy-1,4-phenylen, 2-Methoxy-1,4-phenylen, 4,8-Disulfo-2,6-naphthylen, 8-Sulfo-2,6-naphthylen, 1,4-Naphthylen und 1,1′-Biphenyl-4,4′-diyl.

A steht als Arylenrest vorzugsweise für einen unsubstituierten oder durch Sulfo, Methyl, Methoxy oder Carboxy substituierten 1,3- oder 1,4-Phenylenrest oder für einen unsubstituierten oder durch Sulfo substituierten Naphthylenrest.

Bei A als Arylenrest handelt es sich besonders bevorzugt um unsubstituiertes oder durch Sulfo substituiertes 1,3- oder 1,4-Phenylen.

A bedeutet vorzugsweise einen unsubstituierten oder durch Hydroxy, Sulfo, Sulfato, Methoxy, Carboxy, oder Sulfophenyl substituierten C₂-C₄-Alkylenrest, -CH₂-CH₂-Q′-CH₂-CH₂- worin Q′ -O-, -S-, -SO₂-, -NH- oder -N(CH₃)- bedeutet, einen unsubstituierten oder durch Sulfo substituierten 1,3- oder 1,4-Phenylenrest, einen unsubstituierten oder durch 1 bis 3 Methylgruppen substituierten Cyclohexylenrest oder einen C₁-C₃-Alkylen-phenylen- oder C₁-C₂-Alkylen-phenylen-C₁-C₂-alkylenrest, worin das Phenylen jeweils unsubstituiert oder durch Methyl, Methoxy, Chlor oder Sulfo substituiert ist.

X steht bevorzugt für eine Gruppe -O- oder -N(R₃)-, worin für R₃ die zuvor angegebenen Bedeutungen und Bevorzugungen gelten. Besonders bevorzugt stellt X die Gruppe -NHdar.

Y bedeutet bevorzugt Methoxy, Methyl, Chlor, Carboxy oder Sulfo, und die Variable n steht vorzugsweise für die Zahl 0.

Der Rest R₂ bedeutet bevorzugt Chlor.

Q stellt bevorzugt eine funktionelle Gruppe der Formel 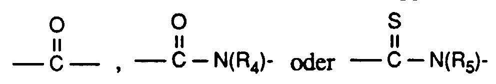 dar, worin für R₄ und R₅ die zuvor genannten Bedeutungen und Bevorzugungen gelten.

Besonders bevorzugte funktionelle Gruppen Q entsprechen der Formel 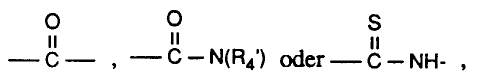 worin R₄'C₁-C₄-Alkyl, Cyclohexyl oder unsubstituiertes oder durch Sulfo, Chlor, Methyl und/oder Methoxy substituiertes Phenyl oder Benzyl, insbesondere Methyl, Ethyl, Phenyl oder Benzyl, bedeutet.

Von Bedeutung wegen ihrer guten färberischen Eigenschaften sind Verbindungen der Formel 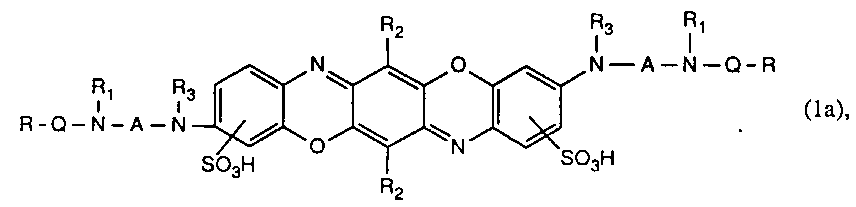 worin R, R₁ und R₃ unabhängig voneinander je für Wasserstoff, unsubstituiertes oder durch Hydroxy, Sulfo, Sulfato, Chlor, Cyano, oder Acetoxy substituiertes und/oder mit Ausnahme von Methyl gegebenenfalls durch eine Gruppe -O- unterbrochenes C₁-C₄-Alkyl, unsubstituiertes oder durch 1 bis 3 Methylgruppen substituiertes Cyclopentyl oder Cyclohexyl, unsubstituiertes oder durch Sulfo, Nitro, Fluor, Chlor, Methyl, Methoxy, N-Methyl- oder N-Ethylamino, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Sulfo, Nitro und/oder Chlor substituiertes 1- oder 2-Naphthyl oder für unsubstituiertes oder durch Methyl, Methoxy, Sulfo, Fluor und/oder Chlor substituiertes Benzyl, Thiophenyl, Furyl oder Pyridinyl bedeuten,
R₂ Chlor oder Brom ist, A für einen unsubstituierten oder durch Hydroxy, Sulfo, Sulfato, Methoxy, Carboxy oder Sulfophenyl substituierten C₂-C₄-Alkylenrest oder -CH₂-CH₂-Q′-CH₂-CH₂- worin Q′-O-, -S-, -SO₂-, -NH- oder -N(CH₃)- bedeutet steht und Q eine funktionelle Gruppe der Formel 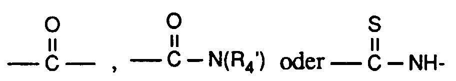 bedeutet, worin R₄' C₁-C₄-Alkyl, Cyclohexyl oder unsubstituiertes oder durch Sulfo, Chlor, Methyl und/oder Methoxy substituiertes Phenyl oder Benzyl ist, mit der Massgabe, dass R nicht Methyl oder Phenyl ist, wenn Q eine Gruppe der Formel 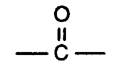 darstellt, R₁ Wasserstoff bedeutet, X -NR₃- ist und A 1,2-Ethylen, 1,3-Propylen oder 1,4-Butylen ist

Von besonderer Bedeutung wegen ihrer guten färberischen Eigenschaften sind Verbindungen der Formel 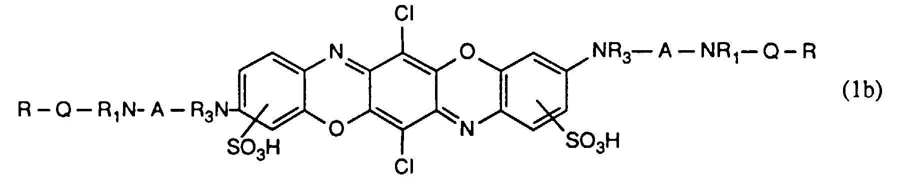 worin R, R₁ und R₃ unabhängig voneinander je Wasserstoff, unsubstituiertes oder durch Hydroxy oder Sulfato substituiertes C₁-C₄-Alkyl, Cyclohexyl, unsubstituiertes oder durch Sulfo, Chlor, Methyl und/oder Methoxy substituiertes Phenyl oder Benzyl oder unsubstituiertes oder durch Sulfo substituiertes 1- oder 2-Naphthyl bedeuten, A für einen unsubstituierten oder durch Hydroxy oder Sulfato substituierten 1,2-Ethylen- oder 1,2-oder 1,3-Propylenrest steht und Q einen Rest der Formel 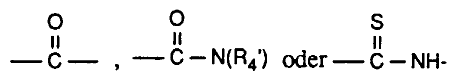 darstellt, worin R₄' Methyl, Ethyl, Phenyl oder Benzyl bedeutet, mit der Massgabe dass R nicht Methyl oder Phenyl ist, wenn Q eine Gruppe der Formel 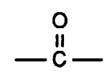 darstellt, R₁ Wasserstoff bedeutet und A 1,2-Ethylen oder 1,3-Propylen ist.

Eine besonders bevorzugte Ausführungsform der Erfindung betrifft Verbindungen der zuvor angegebenen Formel (1b), worin R₁ und R₃ je Wasserstoff sind.

Die Verbindungen der Formel (1) können erhalten werden, z.B. indem man eine Verbindung der Formel 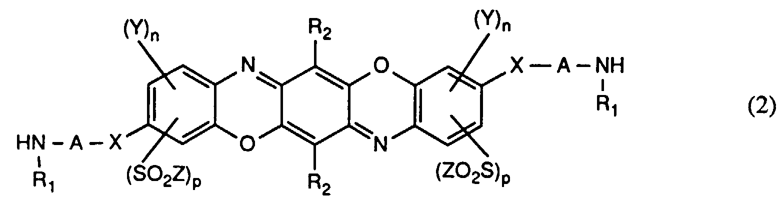 mit einer Verbindung der Formel

R-Q-Hal (3),

umsetzt, worin R, R₁, R₂, A, Q, X, Y, Z, n und p jeweils die zuvor angegebene Bedeutung haben und Hal Halogen, bevorzugt Chlor, darstellt.

Die Verbindungen der Formeln (2) und (3) sind bekannt oder können in bekannter Weise erhalten werden.

Die Kondensationsreaktion wird vorteilhaft in einem wässrigen oder wässrig-organischem Medium bei einer Temperatur von z.B. 0 bis 100°C und vorzugsweise 0 bis 50°C, durchgeführt. Man arbeitet zweckmässig bei einem neutralen bis alkalischen pH-Wert, d.h. bei einem pH-Wert von 7 bis 13 und vorzugsweise 8 bis 12; der pH-Wert kann durch Zugabe von Basen, z.B. Alkalimetallhydroxiden oder -carbonaten, Ammoniak oder organischen Aminen eingestellt und während der Kondensationsreaktionen konstant gehalten werden.

Es werden im allgemeinen mindestens 2-Mol Aequivalente Verbindung der Formel (3) pro Mol-Aequivalent Verbindung der Formel (2) eingesetzt, wobei sich ein gewisser Ueberschuss an Verbindung der Formel (3) als vorteilhaft erwiesen hat. Vorzugsweise verwendet man 2 bis 5 und besonders bevorzugt 2,2 bis 4 Mol-Aequivalente Verbindung der Formel (3) pro Mol-Aequivalent Verbindung der Formel (2).

Ein weiterer Gegenstand der Erfindung ist die Verwendung der Verbindungen der Formel (1) als Farbstoffe zum Färben oder Bedrucken von stickstoffhaltigen und insbesondere hydroxylgruppenhaltigen Fasermaterialien.

Die erfindungsgemässen Verbindungen der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke. Neben den textilen Substraten können auch Leder und Papier mit den erfindungsgemässen Farbstoffen gefärbt werden.

Man erhält egale Färbungen in blauen oder roten Farbtönen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen Farbstoffe sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 100 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungsgemässe Farbstoff bzw. das Farbstoffgemisch sie aufweisen, so ist es auch möglich Ton-in-Ton-Färbungen zu erhalten.

Mit der Bereitstellung der erfindungsgemässen Farbstoffe kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Verbindungen der Formel (1) eignen sich auch zur Herstellung von wässrigen Tinten für den Tintenstrahldruck (ink-jet printing).

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

### Beispiel 1:

a) 96 Teile 4-(2-Aminoethylamino)-anilin-3-sulfonsäure werden in eine Mischung von 3000 Teilen Wasser und 600 Teilen Isopropanol suspendiert und die Suspension mit 13 Teilen eines Phosphatpuffergemisches und anschliessender Zugabe von 14 Teilen einer wässrigen 4-normalen Salzsäurelösung auf einen pH-Wert von 5,9 gestellt. Anschliessend wird auf eine Temperatur von 50° aufgeheizt Es werden 49,52 Teile Chloranil zugegeben und die Mischung drei Stunden gerührt, wobei der pH durch Zugabe einer 2-normalen Kaliumhydrogencarbonatlösung bei einem Wert von 6 gehalten wird. Die Mischung wird auf eine Temperatur von ca. 40° abgekühlt, das erhaltene Produkt abgenutscht, zweimal mit je 200 Teilen einer wässrigen Natriumchloridlösung und dann einmal mit 200 Teilen Aceton gewaschen. Nach Trocknung bei einer Temperatur von 40° erhält man eine Verbindung der Formel 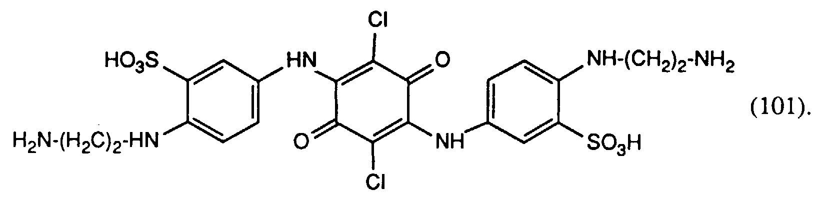
b) 900 Teile Oleum (25%) werden vorgelegt und innerhalb von drei Stunden werden 166,2 Teile der wie oben unter a) angegeben erhaltenen Verbindung der Formel (101) bei einer Temperatur von 0 bis 5° in gleichmässigen Portionen eingetragen. Anschliessend wird 30 Minuten bei Raumtemperatur nachgerührt. Dann werden innerhalb von 90 Minuten bei einer Temperatur von 20 bis 30° 118,95 Teile Kaliumperoxodisulfat eingetragen und es wird 75 Minuten nachgerührt. Das Reaktionsgemisch wird auf ein Gemisch von 3000 Teilen Eis und 600 Teilen Wasser ausgetragen, wobei die Temperatur 30° nicht übersteigen sollte. Das erhaltene Produkt wird abgenutscht, das feuchte Nutschgut in 2000 Teilen Wasser verrührt und mit 1400 Teilen Natriumhydroxidlösung (30%) auf einen pH-Wert von 7 gestellt. Es wird über Nacht ausgerührt, das Produkt abgenutscht, dreimal mit je 100 Teilen Wasser und anschliessend mit 100 Teilen Ethanol gewaschen. Nach Trocknung erhält man die Verbindung der Formel 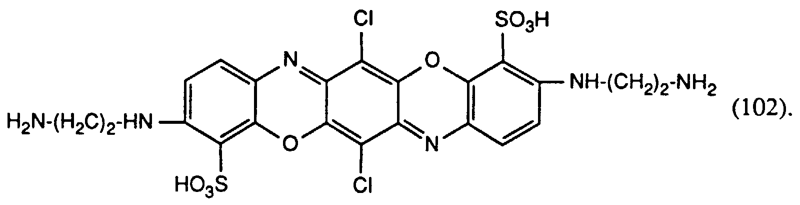
c) 13,4 Teile der wie oben gemäss Schritt b) erhaltenen Verbindung der Formel (102) werden in 300 Teilen Wasser unter Zugabe von soviel Natriumhydroxidlösung gelöst, dass das Reaktionsgemisch einen pH-Wert von ca. 11 aufweist. Man tropft 5,6 Teile Benzoylchlorid gelöst in 20 Teilen Dioxan innerhalb von ca. 90 Minuten bei Raumtemperatur zu und lässt das Gemisch unter Einhaltung des pH-Werts von 11 ausreagieren, bis keine Natriumhydroxidlösung mehr verbraucht wird. Danach wird der pH-Wert des Reaktionsgemisches mit Salzsäure neutral gestellt, die Reaktionslösung zum Sieden erhizt und das Produkt mit Kochsalz ausgesalzen. Nach dem Erkalten wird das Produkt abfiltriert und getrocknet; es entspricht der Formel 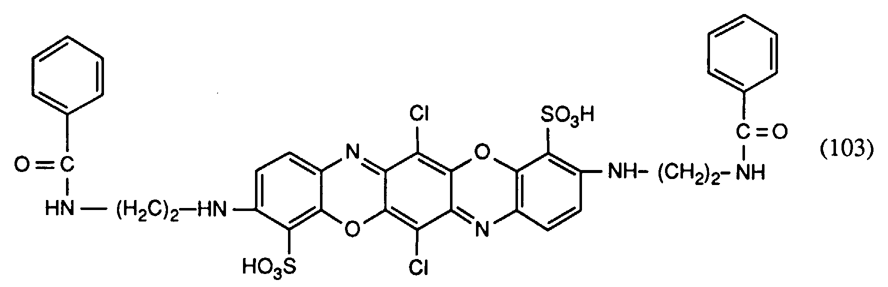 und färbt Baumwolle und Polyamid in einer reinblauen Nuance mit guten Allgemeinechtheiten.

Beispiele 2 bis 16: Verfährt man wie im Beispiel 1 beschrieben, verwendet jedoch anstelle von 5,6 Teilen Benzoylchlorid eine äquimolare Menge einer der in der folgenden Tabelle 1 in Spalte 2 angegebenen Säurechloridverbindungen, so erhält man analoge Farbstoffe, die Baumwolle und Polyamid in einer reinblauen Nuance mit guten Allgemeinechtheiten färben.

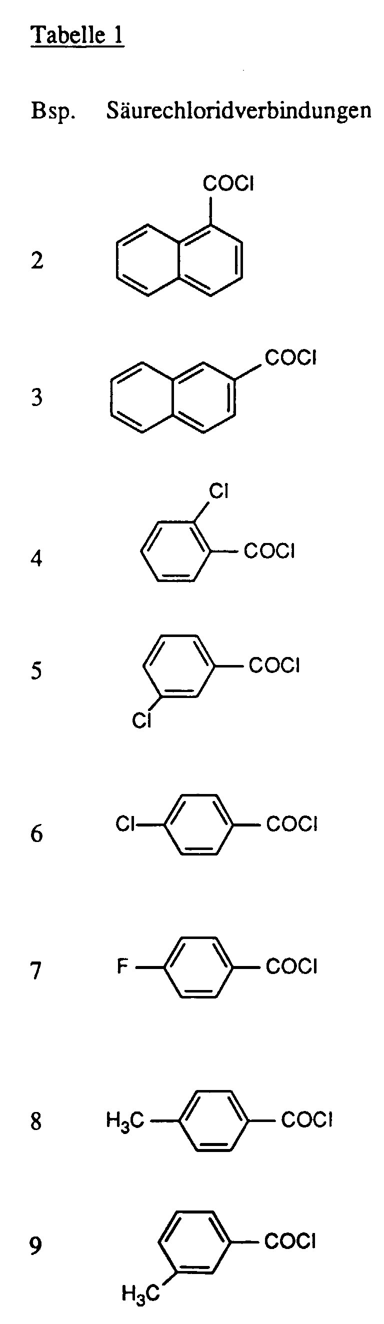

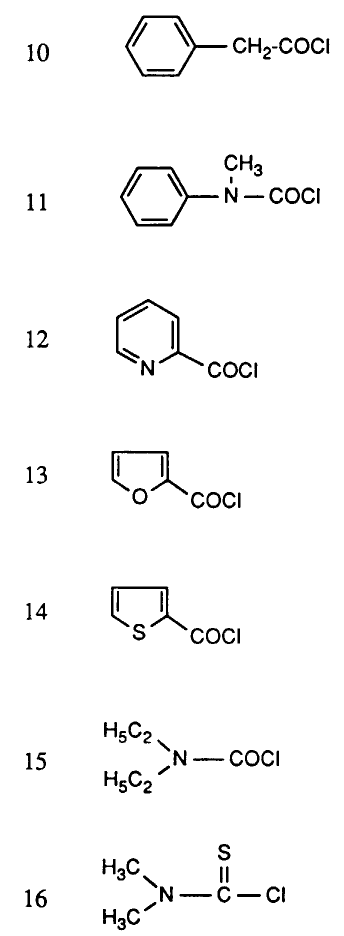

Beispiele 17 bis 27: Verfährt man wie im Beispiel 1 beschrieben, verwendet jedoch anstelle von 96 Teilen 4-(2-Aminoethylamino)-anilin-3-sulfonsäure eine äquimolare Menge einer der in der folgenden Tabelle 2 in Spalte 2 angegebenen Anilinoverbindungen, so erhält man analoge Farbstoffe, die Baumwolle und Polyamid in einer reinblauen Nuance mit guten Allgemeinechtheiten färben.

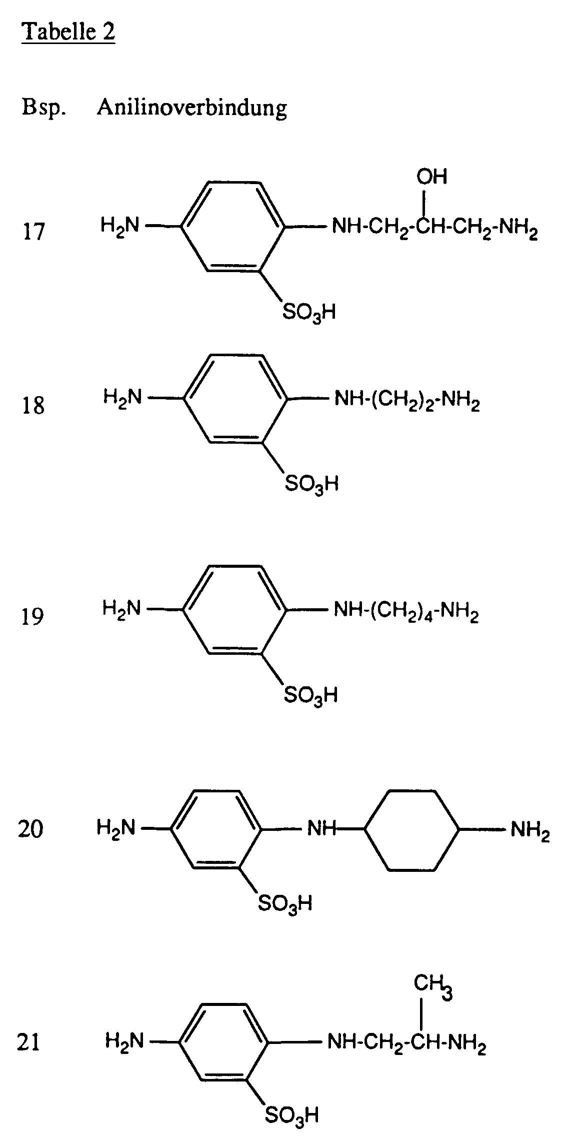

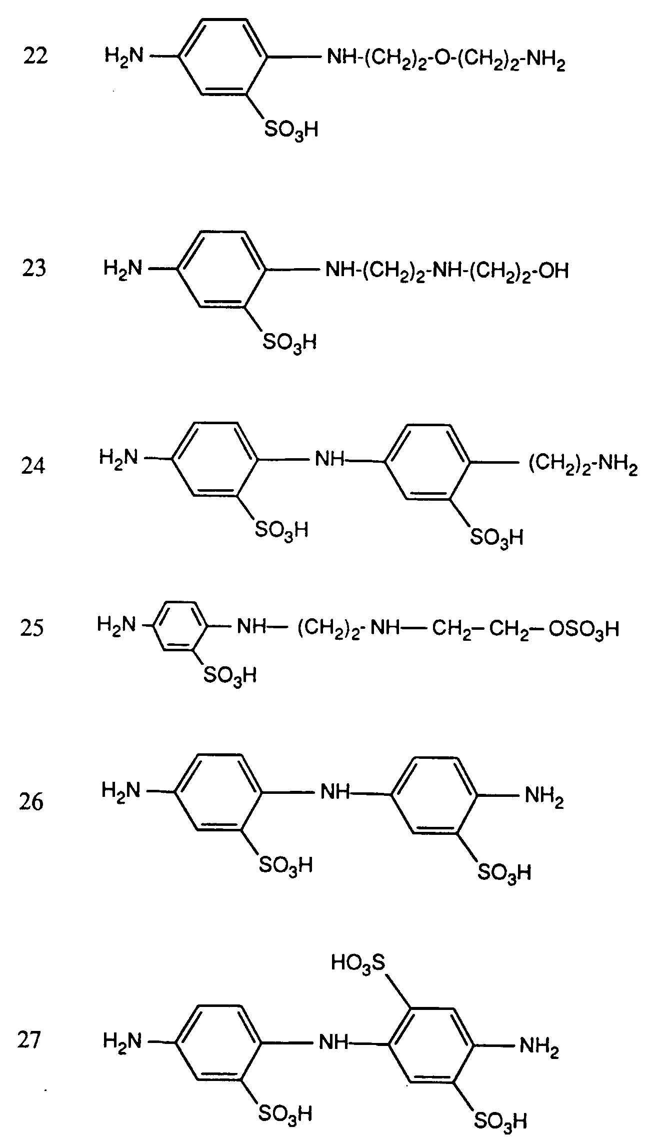

Beispiel 28: 42,6 Teile der Verbindung der Formel 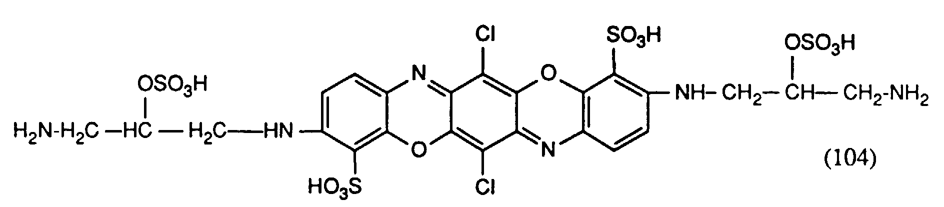 werden in 1000 Teilen Wasser unter Zugabe von soviel Natriumhydroxidlösung gelöst, dass sich ein pH-Wert von ca. 11 ergibt. Man tropft 21,1 Teile Benzoylchlorid gelöst in 80 Teilen Dioxan innerhalb von ca. 30 Minuten bei einer Temperatur von ca. 30° zu, hält dabei den pH-Wert durch Zugabe von Natriumhydroxidlösung bei 10,5 bis 11 und lässt ausreagieren, bis keine Natriumhydroxidlösung mehr verbraucht wird. Anschliessend wird das Produkt mit Kochsalz ausgesalzen, abfiltriert und getrocknet; es entspricht der Formel 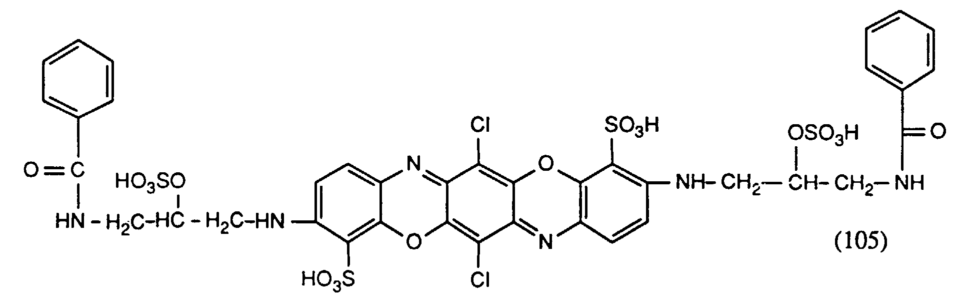 und färbt Baumwolle und Polyamid in einer reinblauen Nuance mit guten Allgemeinechtheiten.

Die oben angegebene Verbindung der Formel (104) ist gemäss Schritt a) des Beispiels 1 erhältlich, wobei man jedoch anstelle von 96 Teilen 4-(2-Aminoethylamino)-anilin-3-sulfonsäure eine äquimolare Menge 4-(2-Sulfato-3-aminopropylamino)-anilin-3-sulfonsäure verwendet.

### Beispiel 29:

a) 83 Teile 2-Hydroxyethylacetamid werden in 300 Teilen Acetonitril gelöst. In die Mischung werden bei einer durch externe Kühlung konstant gehaltenen Temperatur von 25° innerhalb von ca. 10 Minuten 32 Teile Natriumhydrid (55%) eingetragen. Anschliessend wird 10 Minuten nachgerührt und innerhalb von 2 Stunden 7,97 Teile Benzyltriethylammoniumchlorid eingetragen. Zu der Mischung wird eine Lösung von 98,77 Teilen 4-Fluornitrobenzol in 100 Teilen Acetonitril getropft und die Reaktionsmischung über Nacht bei Raumtemperatur gerührt. Die erhaltene gelbe Suspension wird auf 1000 Teilen Wasser ausgetragen, ca. 6 Stunden bei Raumtemperatur gerührt, abgenutscht, mit 1000 Teilen Wasser gewaschen und bei einer Temperatur von 40° getrocknet. Das erhaltene Rohprodukt wird in 250 Teilen Acetonitril heiss gelöst, filtriert, über Nacht auskristallisieren gelassen, abgenutscht und im Vakuum getrocknet. Man erhält 97 Teile einer Verbindung der Formel 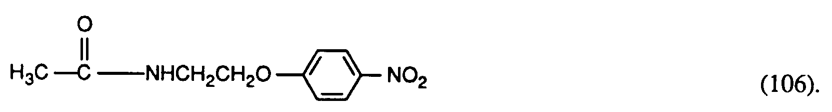 112,1 Teile der so erhaltenen Verbindung der Formel (106) werden in ca. 700 Teilen Tetrahydrofuran gelöst und unter Zusatz eines Palladium/Kohlenstoff-Katalysators durch Einleitung von Wasserstoffgas hydriert. Nach dem Filtrieren wird das Lösungsmittel im Wasserstrahlvakuum bei einer Temperatur von 40° abgezogen. Man erhält 94 Teile einer Verbindung der Formel 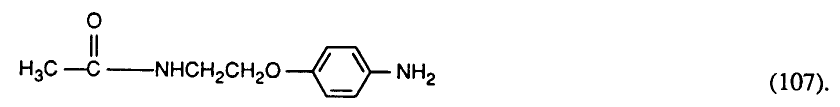
b) Eine Mischung von 48,55 Teilen der oben wie unter a) angegeben erhaltenen Verbindung der Formel (107), 30,725 Teile Chloranil und 51,25 Teile Natriumacetat in 500 Teilen Ethanol wird bei Raumtemperatur vorgelegt. Anschliessend wird die dunkle Suspension auf eine Temperatur von 78° geheizt und unter Rückfluss 5 Stunden bei dieser Temperatur belassen. Nach Abkühlung auf Raumtemperatur, Filtration, Waschen mit Ethanol und Trocknung über Nacht bei einer Temperatur von 100° erhält man die Verbindung der Formel 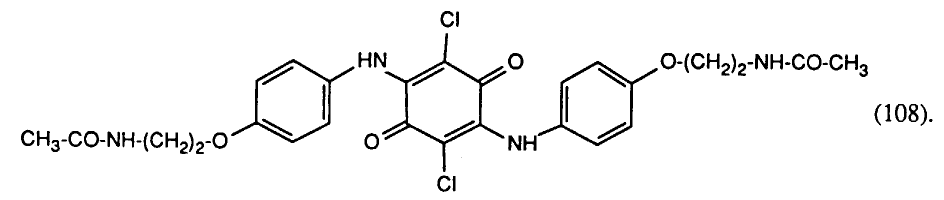
c) Es werden 625 Teile Oleum (25%) bei einer Temperatur von 0 bis 5° vorgelegt und 92,58 Teile der Verbindung der Formel (108) bei 0 bis 5° innerhalb von 5 Stunden fein pulverisiert langsam zugegeben. Man lässt die Temperatur auf 20° ansteigen und rührt eine Stunde nach. Anschliessend werden innerhalb von 2 Stunden bei einer Temperatur von 20 bis 25° 84,48 Teile Kaliumperoxodisulfat zugegeben und die Mischung über Nacht gerührt. Dann wird die Mischung bei einer Temperatur von 0 bis 10° auf Eis ausgetragen, der pH mit Calciumcarbonat auf einen Wert von ca. 2 gestellt und filtriert. Das Filtrat wird durch Zugabe von Natriumhydroxid auf einen pH-Wert von ca. 5 gestellt und gefriergetrocknet. Man erhält 137,44 Teile eines Farbstoffs der Formel 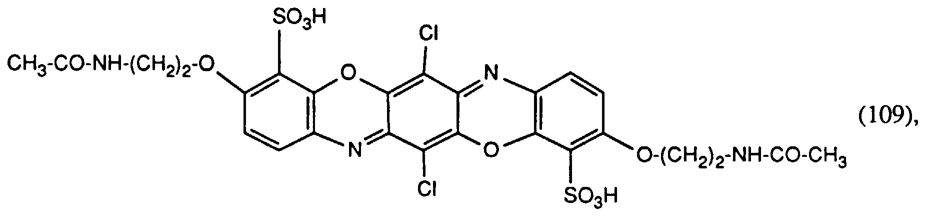 der Baumwolle und Polyamid in einer blaustichig roten Nuance mit guten Allgemeinechtheiten färbt.

Beispiel 30: 9,2 Teile der Verbindung der Formel (102), erhältlich gemäss den Schritten a) und b) des Beispiels 1, mit einem Gehalt von 70% werden mit 200 Teilen Wasser bei einer Temperatur von 80° und einem pH-Wert von 8 verrührt. Dann werden 3,2 Teile Cyclohexylisothiocyanat, gelöst in 15 Teilen Dioxan, innerhalb von einer Stunde zugetropft. Man lässt 4 Stunden bei einer Temperatur von 80° ausreagieren. Anschliessend wir mit Salzsäure auf pH 3 gestellt und nach Abkühlung auf Raumtemperatur das ausgefallene Produkt abgenutscht und mit Natriumchloridlösung gewaschen. Nach Trocknung erhält man 10 Teile eines Farbstoffs der Formel 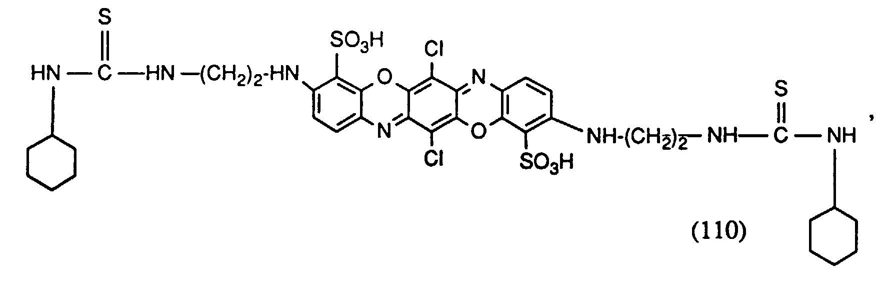 der Baumwolle und Polyamid in einer reinblauen Nuance mit guten Allgemeinechtheiten färbt.

Beispiele 31 bis 33: Verfährt man wie in Beispiel 30 angegeben, verwendet jedoch anstelle von 3,2 Teilen Cyclohexylisothiocyanat eine äquimolare Menge Butylisothiocyanat, tert-Butylisothiocyanat oder Phenylisothiocyanat, so erhält man analoge Farbstoffe, die Baumwolle und Polyamid in einer reinblauen Nuance mit guten Allgemeinechtheiten färben.

### Färbevorschrift I

12,5 Teile eines nicht mercerisierten, ungebleichten Baumwollgewebes werden mit einem Teil eines nichtionogenen Netzmittels bei einer Temperatur von 80° eingenetzt. Das Baumwollgewebe wird in eine Farbstofflösung, welche 2% des Farbstoffs der Formel (103) aus Beispiel 1 und 2 g/l Natriumsulfat enthält, bei einem Flottenverhältnis von 1:20 eingetragen. Anschliessend wird das Färbebad innerhalb von 30 Minuten auf eine Temperatur von 95° erhitzt, es werden 8 g/l Natriumsulfat zugegeben, das Färbebad 45 Minuten bei der Temperatur von 95° belassen, innerhalb von 15 Minuten auf eine Temperatur von 80° abgekühlt und weitere 15 Minuten bei dieser Temperatur belassen. Nach Spülung mit Wasser und Trocknung erhält man ein in einer reinblauen Nuance gefärbtes Baumwollgewebe, welches gute Allgemeinechtheiten aufweist.

### Färbevorschrift II

12,5 Teile Polyamid-6.6-Gewebe werden bei einer Temperatur von 40° in ein Färbebad, welches durch Zugabe von 2 g/l eines Phosphatpuffers auf pH 6 gestellt ist, gegeben. Das Flottenverhältnis beträgt 1:20. Nach 10 Minuten werden 2% des Farbstoffs der Formel (103) aus Beispiel 1 zugegeben und das Färbebad innerhalb von 45 Minuten zum Sieden erhitzt und 45 Minuten bei dieser Temperatur belassen. Nach Spülung mit Wasser und Trocknung erhält man ein in einer reinblauen Nuance gefärbtes Polyamid-6.6-Gewebe, welches gute Allgemeinechtheiten aufweist.

## Patentansprüche (Patentansprüche für folgende(n) Vertragsstaat(en): BE, CH, DE, FR, GB, IT, LI)

1. Verbindungen der Formel 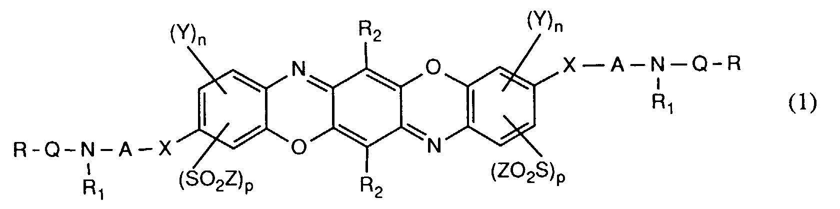 worin
A für einen gegebenenfalls substituierten Alkylen-, Cycloalkylen-, Arylen- oder Aralkylenrest steht,
X -O-, -S- oder -NR₃-, worin R₃ Wasserstoff oder ein gegebenenfalls substituierter Alkyl-, Cycloalkyl-, Aryl-, Aralkyl- oder heterocylischer Rest ist, bedeutet,
Y Halogen, C₁-C₄-Alkyl, C₁-C₄-Alkoxy, Sulfo oder Carboxy darstellt,
n für die Zahl 0 oder 1 steht,
Z Hydroxy oder gegebenenfalls substituiertes Alkyl, Aryl oder Aralkyl bedeutet, p für die Zahl 0 oder 1 steht,
R₂ Chlor oder Brom ist,
R und R₁ unabhängig voneinander je Wasserstoff oder einen gegebenenfalls substituierten Alkyl-, Cycloalkyl-, Aralkyl-, Aryl-, Thiophenyl-, Furyl- oder Pyridinylrest bedeuten,
Q eine funktionelle Gruppe der Formel 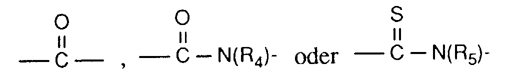 darstellt,
R₄ ein gegebenenfalls substituierter Alkyl-, Cycloalkyl-, Aralkyl-, Aryl- oder heterocyclischer Rest ist und R₅ Wasserstoff ist oder unabhängig die Bedeutung von R₄ hat, oder worin die Reste -N(R)₄- und/oder -N(R₅)- unabhängig voneinander je einen bivalenten 5- bis 7-gliedrigen aliphatischen Heterocyclus darstellen, mit der Massgabe, dass R nicht Methyl, β-Carboxyethyl, Phenyl, 2-Carboxyphenyl oder 3,4,5,6-Tetrachloro-2-carboxyphenyl ist, wenn Q eine Gruppe der Formel 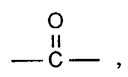 R₁ Wasserstoff, X -NR₃- und A 1,2-Ethylen, 1,3-Propylen, 1,4-Butylen, Cyclopentylen oder Cyclohexylen bedeuten.

2. Verbindungen gemäss Anspruch 1, dadurch gekennzeichnet, dass R, R₁, R₃ und R₅ unabhängig voneinander für Wasserstoff, unsubstituiertes oder durch Hydroxy, Sulfo, Sulfato, Chlor, Cyano, oder Acetoxy substituiertes und/oder mit Ausnahme von Methyl gegebenenfalls durch eine Gruppe -O- unterbrochenes C₁-C₄-Alkyl, unsubstituiertes oder durch 1 bis 3 Methylgruppen substituiertes Cyclopentyl oder Cyclohexyl, unsubstituiertes oder durch Sulfo, Nitro, Fluor, Chlor, Methyl, Methoxy, N-Methyl- oder N-Ethylamino, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Sulfo, Nitro und/oder Chlor substituiertes 1- oder 2-Naphthyl, unsubstituiertes oder durch Methyl, Methoxy, Sulfo, Fluor und/oder Chlor substituiertes Benzyl, Thiophenyl, Furyl oder Pyridinyl stehen.

3. Verbindungen gemäss Anspruch 1 oder 2, dadurch gekennzeichnet, dass R, R₁, R₃ und R₅ unabhängig voneinander je Wasserstoff, unsubstituiertes oder durch Hydroxy oder Sulfato substituiertes C₁-C₄-Alkyl, Cyclohexyl, unsubstituiertes oder durch Sulfo, Fluor, Chlor, Methyl und/oder Methoxy substituiertes Phenyl oder Benzyl, unsubstituiertes oder durch Sulfo substituiertes 1- oder 2-Naphthyl, Thiophenyl, Furyl oder Pyridinyl bedeuten.

4. Verbindungen gemäss einem der Ansprüche 1 bis 3, dadurch gekennzeichnet, dass R1, R₃ und R₅ je Wasserstoff sind.

5. Verbindungen gemäss einem der Ansprüche 1 bis 4, dadurch gekennzeichnet, dass A einen unsubstituierten oder durch Hydroxy, Sulfo, Sulfato, Methoxy, Carboxy oder Sulfophenyl substituierten C₂-C₄-Alkylenrest, -CH₂-CH₂-Q′-CH₂-CH₂- worin Q′ -O-, -S-, -SO₂-, -NH- oder -N(CH₃)- bedeutet, einen unsubstituierten oder durch Sulfo substituierten 1,3- oder 1,4-Phenylenrest, einen unsubstituierten oder durch 1 bis 3 Methylgruppen substituierten Cyclohexylenrest oder einen C₁-C₃-Alkylen-phenylen oder C₁-C₂-Alkylen-phenylen-C₁-C₂-alkylenrest, worin das Phenylen jeweils unsubstituiert oder durch Methyl, Methoxy, Chlor oder Sulfo substituiert ist, bedeutet.

6. Verbindungen gemäss einem der Ansprüche 1 bis 5, dadurch gekennzeichnet, dass A unsubstituiertes oder durch Hydroxy, Sulfo, Sulfato, Methoxy, Carboxy oder Sulfophenyl substituiertes C₂-C₄-Alkylen bedeutet.

7. Verbindungen gemäss einem der Ansprüche 1 bis 6, dadurch gekennzeichnet, dass A unsubstituiertes oder durch Hydroxy oder Sulfato substituiertes 1,2-Ethylen oder 1,2- oder 1,3-Propylen bedeutet.

8. Verbindungen gemäss einem der Ansprüche 1 bis 7, dadurch gekennzeichnet, dass X für die Gruppe -O- oder -N(R₃)-, worin R₃ Wasserstoff, C₁-C₄-Alkyl, Cyclohexyl, unsubstituiertes oder durch Sulfo, Chlor, Methyl und/oder Methoxy substituiertes Phenyl oder Benzyl oder unsubstituiertes oder durch Sulfo substituiertes 1- oder 2-Naphthyl bedeutet, steht.

9. Verbindungen gemäss Anspruch 8, dadurch gekennzeichnet, dass X für die Gruppe -NH- steht.

10. Verbindungen gemäss einem der Ansprüche 1 bis 9, dadurch gekennzeichnet, dass n für die Zahl 0 steht.

11. Verbindungen gemäss einem der Ansprüche 1 bis 10, dadurch gekennzeichnet, dass p für die Zahl 1 steht und Z Hydroxy oder C₁-C₄-Alkyl, besonders Hydroxy, bedeutet.

12. Verbindungen gemäss einem der Ansprüche 1 bis 11, dadurch gekennzeichnet, dass R₂ Chlor bedeutet.

13. Verbindungen gemäss einem der Ansprüche 1 bis 12, dadurch gekennzeichnet, dass R₄ C₁-C₄-Alkyl, Cyclohexyl oder unsubstituiertes oder durch Sulfo, Chlor, Methyl und/oder Methoxy substituiertes Phenyl oder Benzyl bedeutet.

14. Verbindungen gemäss einem der Ansprüche 1 bis 13, dadurch gekennzeichnet, dass Q eine funktionelle Gruppe der Formel 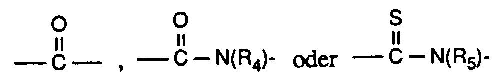 darstellt, worin R₄ die im Anspruch 13 angegebene Bedeutung und R₅ die im Anspruch 3 angegebene Bedeutung haben.

15. Verbindungen gemäss einem der Ansprüche 1 bis 14, dadurch gekennzeichnet, dass Q eine funktionelle Gruppe der Formel 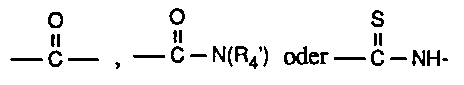 darstellt, worin R₄′ Methyl, Ethyl, Phenyl oder Benzyl bedeutet.

16. Verbindungen gemäss Anspruch 1 der Formel 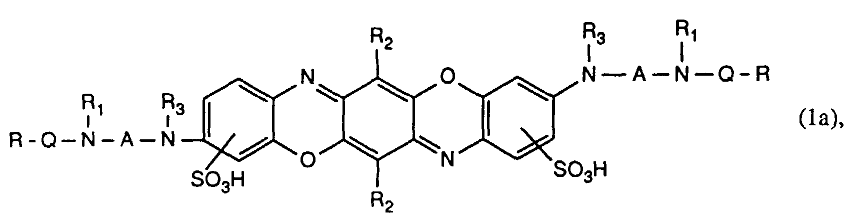 worin R, R₁ und R₃ unabhängig voneinander je Wasserstoff, unsubstituiertes oder durch Hydroxy, Sulfo, Sulfato, Chlor, Cyano, oder Acetoxy substituiertes und/oder mit Ausnahme von Methyl gegebenenfalls durch eine Gruppe -O- unterbrochenes C₁-C₄-Alkyl, unsubstituiertes oder durch 1 bis 3 Methylgruppen substituiertes Cyclopentyl oder Cyclohexyl, unsubstituiertes oder durch Sulfo, Nitro, Fluor, Chlor, Methyl, Methoxy, N-Methyl- oder N-Ethylamino, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Sulfo, Nitro und/oder Chlor substituiertes 1- oder 2-Naphthyl oder unsubstituiertes oder durch Methyl, Methoxy, Sulfo, Fluor und/oder Chlor substituiertes Benzyl, Thiophenyl, Furyl oder Pyridinyl bedeuten,
R₂ Chlor oder Brom ist, A für einen unsubstituierten oder durch Hydroxy, Sulfo, Sulfato, Methoxy, Carboxy oder Sulfophenyl substituierten C₂-C₄-Alkylenrest oder -CH₂-CH₂-Q′-CH₂-CH₂- worin Q′ -O-, -S-, -SO₂-, -NH- oder -N(CH₃)- bedeutet, steht und Q eine funktionelle Gruppe der Formel 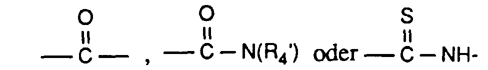 bedeutet, worin R₄′ C₁-C₄-Alkyl, Cyclohexyl oder unsubstituiertes oder durch Sulfo, Chlor, Methyl und/oder Methoxy substituiertes Phenyl oder Benzyl ist, mit der Massgabe, dass R nicht Methyl oder Phenyl ist, wenn Q eine Gruppe der Formel 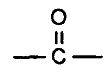 darstellt, R₁ Wasserstoff bedeutet, X -NR₃- ist und A 1,2-Ethylen, 1,3-Propylen oder 1,4-Butylen ist.

17. Verbindungen gemäss Anspruch 1 der Formel 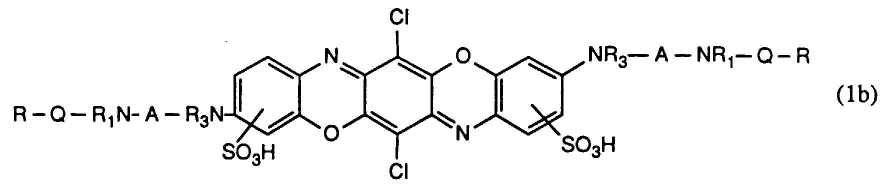 worin R, R₁ und R₃ unabhängig voneinander je Wasserstoff, unsubstituiertes oder durch Hydroxy oder Sulfato substituiertes C₁-C₄-Alkyl, Cyclohexyl, unsubstituiertes oder durch Sulfo, Chlor, Methyl und/oder Methoxy substituiertes Phenyl oder Benzyl oder unsubstituiertes oder durch Sulfo substituiertes 1- oder 2-Naphthyl bedeuten, A für einen unsubstituierten oder durch Hydroxy oder Sulfato substituierten 1,2-Ethylen- oder 1,2-oder 1,3-Propylenrest steht und Q einen Rest der Formel 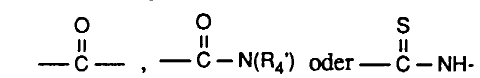 darstellt, worin R₄' Methyl, Ethyl, Phenyl oder Benzyl bedeutet, mit der Massgabe dass R nicht Methyl oder Phenyl ist, wenn Q eine Gruppe der Formel 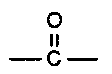 darstellt, R1 Wasserstoff bedeutet und A 1,2-Ethylen oder 1,3-Propylen ist.

18. Verbindungen gemäss Anspruch 17, worin R₁ und R₃ je Wasserstoff sind.

19. Verfahren zur Herstellung von Verbindungen der Formel(1) gemäss Anspruch 1, dadurch gekennzeichnet, dass man eine Verbindung der Formel 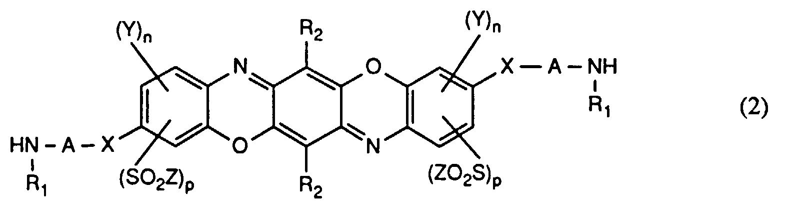 mit einer Verbindung der Formel
R-Q-Hal (3),
umsetzt, worin R, R₁, R₂, A, Q, X, Y, Z, n und p jeweils die im Anspruch 1 angegebene Bedeutung haben und Hal Halogen, bevorzugt Chlor, darstellt.

20. Verwendung der Verbindungen der Formel (1) als Farbstoffe zum Färben und Bedrucken von stickstoffhaltigen und insbesondere cellulosischen Fasermaterialien.

21. Verwendung nach Anspruch 20, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

22. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Verbindungen der Formel (1) gemäss Anspruch 1 als Farbstoffe verwendet und aus wässriger Flotte bei Temperaturen im Bereich von 100 bis 150°C, vorzugsweise 120 bis 130°C, und einem pH-Wert zwischen 4 und 7,5 färbt.

## Patentansprüche (Patentansprüche für folgende(n) Vertragsstaat(en): ES)

1. Verfahren zur Herstellung von Verbindungen der Formel 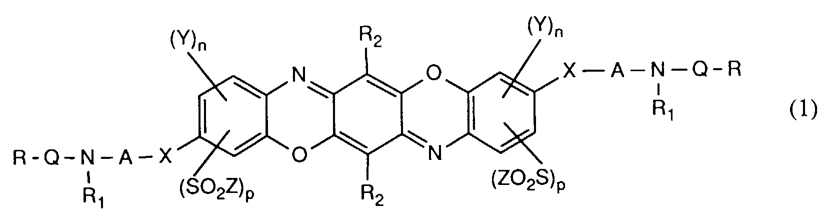 worin
A für einen gegebenenfalls substituierten Alkylen-, Cycloalkylen-, Arylen- oder Aralkylenrest steht,
X -O-, -S- oder -NR₃-, worin R₃ Wasserstoff oder ein gegebenenfalls substituierter Alkyl-, Cycloalkyl-, Aryl-, Aralkyl- oder heterocylischer Rest ist, bedeutet,
Y Halogen, C₁-C₄-Alkyl, C₁-C₄-Alkoxy, Sulfo oder Carboxy darstellt,
n für die Zahl 0 oder 1 steht,
Z Hydroxy oder gegebenenfalls substituiertes Alkyl, Aryl oder Aralkyl bedeutet, p für die Zahl 0 oder 1 steht,
R₂ Chlor oder Brom ist,
R und R₁ unabhängig voneinander je Wasserstoff oder einen gegebenenfalls substituierten Alkyl-, Cycloalkyl-, Aralkyl-, Aryl-, Thiophenyl-, Furyl- oder Pyridinylrest bedeuten, Q eine funktionelle Gruppe der Formel 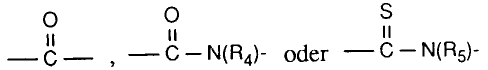 darstellt,
R₄ ein gegebenenfalls substituierter Alkyl-, Cycloalkyl-, Aralkyl-, Aryl- oder heterocyclischer Rest ist und R₅ Wasserstoff ist oder unabhängig die Bedeutung von R₄ hat, oder worin die Reste -N(R)₄- und/oder -N(R₅)- unabhängig voneinander je einen bivalenten 5- bis 7-gliedrigen aliphatischen Heterocyclus darstellen, mit der Massgabe, dass R nicht Methyl, β-Carboxyethyl, Phenyl, 2-Carboxyphenyl oder 3,4,5,6-Tetrachloro-2-carboxyphenyl ist, wenn Q eine Gruppe der Formel 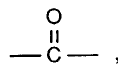 R₁ Wasserstoff, X -NR₃- und A 1,2-Ethylen, 1,3-Propylen, 1,4-Butylen, Cyclopentylen oder Cyclohexylen bedeuten, dadurch gekennzeichnet, dass man eine Verbindung der Formel 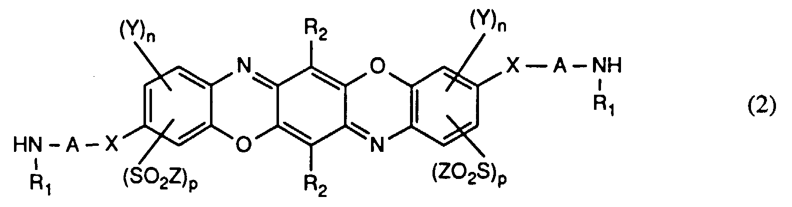 mit einer Verbindung der Formel
R-Q-Hal (3),
umsetzt, worin R, R₁, R₂, A, Q, X, Y, Z, n und p jeweils die unter Formel (1) angegebene Bedeutung haben und Hal Halogen, bevorzugt Chlor, darstellt.

2. Verfahren gemäss Anspruch 1, dadurch gekennzeichnet, dass man eine Verbindung der Formel (2) und eine Verbindung der Formel (3) verwendet, worin R, R₁, R₃ und R₅ unabhängig voneinander für Wasserstoff, unsubstituiertes oder durch Hydroxy, Sulfo, Sulfato, Chlor, Cyano, oder Acetoxy substituiertes und/oder mit Ausnahme von Methyl gegebenenfalls durch eine Gruppe -O- unterbrochenes C₁-C₄-Alkyl, unsubstituiertes oder durch 1 bis 3 Methylgruppen substituiertes Cyclopentyl oder Cyclohexyl, unsubstituiertes oder durch Sulfo, Nitro, Fluor, Chlor, Methyl, Methoxy, N-Methyl- oder N-Ethylamino, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Sulfo, Nitro und/oder Chlor substituiertes 1- oder 2-Naphthyl, unsubstituiertes oder durch Methyl, Methoxy, Sulfo, Fluor und/oder Chlor substituiertes Benzyl, Thiophenyl, Furyl oder Pyridinyl stehen.

3. Verfahren gemäss Anspruch 1 oder 2, dadurch gekennzeichnet, dass man eine Verbindung der Formel (2) und eine Verbindung der Formel (3) verwendet, worin R, R₁, R₃ und R₅ unabhängig voneinander je Wasserstoff, unsubstituiertes oder durch Hydroxy oder Sulfato substituiertes C₁-C₄-Alkyl, Cyclohexyl, unsubstituiertes oder durch Sulfo, Fluor, Chlor, Methyl und/oder Methoxy substituiertes Phenyl oder Benzyl, unsubstituiertes oder durch Sulfo substituiertes 1- oder 2-Naphthyl, Thiophenyl, Furyl oder Pyridinyl bedeuten.

4. Verfahren gemäss einem der Ansprüche 1 bis 3, dadurch gekennzeichnet, dass man eine Verbindung der Formel (2) und eine Verbindung der Formel (3) verwendet, worin R₁, R₃ und R₅ je Wasserstoff sind.

5. Verfahren gemäss einem der Ansprüche 1 bis 4, dadurch gekennzeichnet, dass man eine Verbindung der Formel (2) verwendet, worin A einen unsubstituierten oder durch Hydroxy, Sulfo, Sulfato, Methoxy, Carboxy oder Sulfophenyl substituierten C₂-C₄-Alkylenrest, -CH₂-CH₂-Q′-CH₂-CH₂- worin Q′ -O-, -S-, -SO₂-, -NH- oder -N(CH₃)- bedeutet, einen unsubstituierten oder durch Sulfo substituierten 1,3- oder 1,4-Phenylenrest, einen unsubstituierten oder durch 1 bis 3 Methylgruppen substituierten Cyclohexylenrest oder einen C₁-C₃-Alkylen-phenylen oder C₁-C₂-Alkylen-phenylen-C₁-C₂-alkylenrest, worin das Phenylen jeweils unsubstituiert oder durch Methyl, Methoxy, Chlor oder Sulfo substituiert ist, bedeutet.

6. Verfahren gemäss einem der Ansprüche 1 bis 5, dadurch gekennzeichnet, dass man eine Verbindung der Formel (2) verwendet, worin A unsubstituiertes oder durch Hydroxy, Sulfo, Sulfato, Methoxy, Carboxy oder Sulfophenyl substituiertes C₂-C₄-Alkylen bedeutet.

7. Verfahren gemäss einem der Ansprüche 1 bis 6, dadurch gekennzeichnet, dass man eine Verbindung der Formel (2) verwendet, worin A unsubstituiertes oder durch Hydroxy oder Sulfato substituiertes 1,2-Ethylen oder 1,2- oder 1,3-Propylen bedeutet.

8. Verfahren gemäss einem der Ansprüche 1 bis 7, dadurch gekennzeichnet, dass man eine Verbindung der Formel (2) verwendet, worin X für die Gruppe -O- oder -N(R₃)-, worin R₃ Wasserstoff, C₁-C₄-Alkyl, Cyclohexyl, unsubstituiertes oder durch Sulfo, Chlor, Methyl und/oder Methoxy substituiertes Phenyl oder Benzyl oder unsubstituiertes oder durch Sulfo substituiertes 1- oder 2-Naphthyl bedeutet, steht.

9. Verfahren gemäss Anspruch 8, dadurch gekennzeichnet, dass man eine Verbindung der Formel (2) verwendet, worin X für die Gruppe -NH- steht.

10. Verfahren gemäss einem der Ansprüche 1 bis 9, dadurch gekennzeichnet, dass man eine Verbindung der Formel (2) verwendet, worin n für die Zahl 0 steht.

11. Verfahren gemäss einem der Ansprüche 1 bis 10, dadurch gekennzeichnet, dass man eine Verbindung der Formel (2) verwendet, worin p für die Zahl 1 steht und Z Hydroxy oder C₁-C₄-Alkyl, besonders Hydroxy, bedeutet.

12. Verfahren gemäss einem der Ansprüche 1 bis 11, dadurch gekennzeichnet, dass man eine Verbindung der Formel (2) verwendet, worin R₂ Chlor bedeutet.

13. Verfahren gemäss einem der Ansprüche 1 bis 12, dadurch gekennzeichnet, dass man eine Verbindung der Formel (3) verwendet, worin R₄ C₁-C₄-Alkyl, Cyclohexyl oder unsubstituiertes oder durch Sulfo, Chlor, Methyl und/oder Methoxy substituiertes Phenyl oder Benzyl bedeutet.

14. Verfahren gemäss einem der Ansprüche 1 bis 13, dadurch gekennzeichnet, dass man eine Verbindung der Formel (3) verwendet, worin Q eine funktionelle Gruppe der Formel 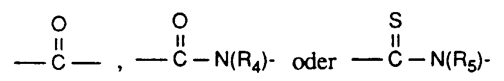 darstellt, worin R₄ die im Anspruch 13 angegebene Bedeutung und R₅ die im Anspruch 3 angegebene Bedeutung haben.

15. Verfahren gemäss einem der Ansprüche 1 bis 14, dadurch gekennzeichnet, dass man eine Verbindung der Formel (3) verwendet, worin Q eine funktionelle Gruppe der Formel 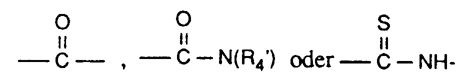 darstellt, worin R₄' Methyl, Ethyl, Phenyl oder Benzyl bedeutet.

16. Verfahren gemäss Anspruch 1, dadurch gekennzeichnet, dass man eine Verbindung der Formel 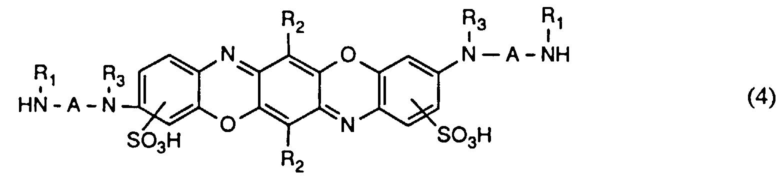 mit einer Verbindung der Formel (3) umsetzt, wobei Hal Halogen, bevorzugt Chlor, darstellt, R, R₁ und R₃ unabhängig voneinander je Wasserstoff, unsubstituiertes oder durch Hydroxy, Sulfo, Sulfato, Chlor, Cyano, oder Acetoxy substituiertes und/oder mit Ausnahme von Methyl gegebenenfalls durch eine Gruppe -O- unterbrochenes C₁-C₄-Alkyl, unsubstituiertes oder durch 1 bis 3 Methylgruppen substituiertes Cyclopentyl oder Cyclohexyl, unsubstituiertes oder durch Sulfo, Nitro, Fluor, Chlor, Methyl, Methoxy, N-Methyl- oder N-Ethylamino, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Sulfo, Nitro und/oder Chlor substituiertes 1- oder 2-Naphthyl oder unsubstituiertes oder durch Methyl, Methoxy, Sulfo, Fluor und/oder Chlor substituiertes Benzyl, Thiophenyl, Furyl oder Pyridinyl bedeuten,
R₂ Chlor oder Brom ist, A für einen unsubstituierten oder durch Hydroxy, Sulfo, Sulfato, Methoxy, Carboxy oder Sulfophenyl substituierten C₂-C₄-Alkylenrest oder -CH₂-CH₂-Q′-CH₂-CH₂- worin Q′ -O-, -S-, -SO₂-, -NH- oder -N(CH₃)- bedeutet, steht und Q eine funktionelle Gruppe der Formel 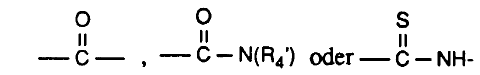 bedeutet, worin R₄' C₁-C₄-Alkyl, Cyclohexyl oder unsubstituiertes oder durch Sulfo, Chlor, Methyl und/oder Methoxy substituiertes Phenyl oder Benzyl ist, mit der Massgabe, dass R nicht Methyl oder Phenyl ist, wenn Q eine Gruppe der Formel 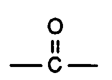 darstellt, R₁ Wasserstoff bedeutet, X -NR₃- ist und A 1,2-Ethylen, 1,3-Propylen oder 1,4-Butylen ist.

17. Verfahren gemäss Anspruch 1, dadurch gekennzeichnet, dass man eine Verbindung der Formel 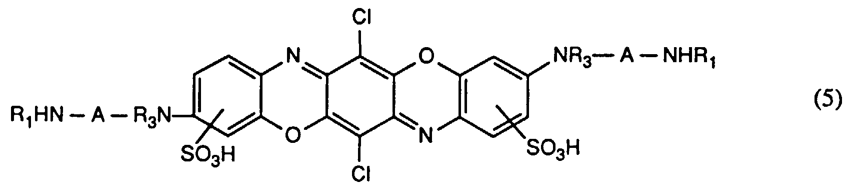 mit einer Verbindung der Formel (3) umsetzt, wobei Hal Halogen, bevorzugt Chlor, darstellt, R, R₁ und R₃ unabhängig voneinander je Wasserstoff, unsubstituiertes oder durch Hydroxy oder Sulfato substituiertes C₁-C₄-Alkyl, Cyclohexyl, unsubstituiertes oder durch Sulfo, Chlor, Methyl und/oder Methoxy substituiertes Phenyl oder Benzyl oder unsubstituiertes oder durch Sulfo substituiertes 1- oder 2-Naphthyl bedeuten, A für einen unsubstituierten oder durch Hydroxy oder Sulfato substituierten 1,2-Ethylen- oder 1,2-oder 1,3-Propylenrest steht und Q einen Rest der Formel 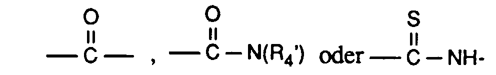 darstellt, worin R4' Methyl, Ethyl, Phenyl oder Benzyl bedeutet, mit der Massgabe dass R nicht Methyl oder Phenyl ist, wenn Q eine Gruppe der Formel 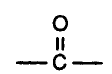 darstellt, R₁ Wasserstoff bedeutet und A 1,2-Ethylen oder 1,3-Propylen ist.

18. Verfahren gemäss Anspruch 17, dadurch gekennzeichnet, dass man eine Verbindung der Formel (5) verwendet, worin R₁ und R₃ je Wasserstoff sind.

19. Verwendung der gemäss Anspruch 1 erhaltenen Verbindungen der Formel (1) als Farbstoffe zum Färben und Bedrucken von stickstoffhaltigen und insbesondere cellulosischen Fasermaterialien.

20. Verwendung nach Anspruch 19, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

21. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen gemäss Anspruch 1 erhaltene Verbindungen der Formel (1) als Farbstoffe verwendet und aus wässriger Flotte bei Temperaturen im Bereich von 100 bis 150°C, vorzugsweise 120 bis 130°C, und einem pH-Wert zwischen 4 und 7,5 färbt.

## Claims (Claims for the following Contracting State(s): BE, CH, DE, FR, GB, IT, LI)

1. A compound of formula 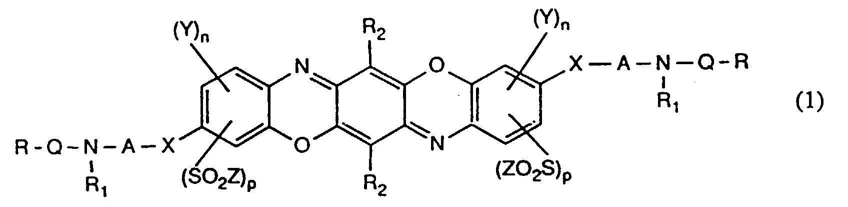 wherein
A is an unsubstituted or substituted alkylene, cycloalkylene, arylene or aralkylene radical,
X is -O-, -S- or -NR₃-, wherein R₃ is hydrogen or an unsubstituted or substituted alkyl, cycloalkyl, aryl, aralkyl or heterocyclic radical,
Y is halogen, C₁-C₄alkyl, C₁-C₄alkoxy, sulfo or carboxy,
n is 0 or 1,
Z is hydroxy or unsubstituted or substituted alkyl, aryl or aralkyl, p is 0 or 1,
R₂ is chloro or bromo,
R and R₁ are each independently of the other hydrogen or an unsubstituted or substituted alkyl, cycloalkyl, aralkyl, aryl, thiophenyl, furyl or pyridinyl radical,
Q is a functional group of formula 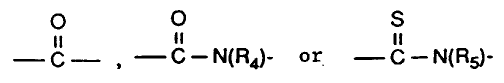
R₄ is an unsubstituted or substituted alkyl, cycloalkyl, aralkyl, aryl or heterocyclic radical, and R₅ is hydrogen or independently has the meaning of R₄, or wherein the radicals -N(R4)- and/or -N(R₅)- are each independently of the other a bivalent 5- to 7-membered aliphatic heterocycle, with the proviso that R is not methyl, β-carboxyethyl, phenyl, 2-carboxyphenyl or 3,4,5,6-tetrachloro-2-carboxyphenyl if Q is a group of formula 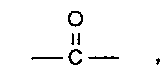 R₁ is hydrogen, X is -NR₃- and A is 1,2-ethylene, 1,3-propylene, 1,4-butylene, cyclopentylene or cyclohexylene.

2. A compound according to claim 1, wherein R, R₁, R₃ and R₅ are each independently of one another hydrogen, unsubstituted C₁-C₄alkyl or C₁-C₄alkyl which is substituted by hydroxy, sulfo, sulfato, chloro, cyano or acetoxy and/or, with the exception of methyl, may be interrupted by a group -0-, unsubstituted cyclopentyl or cyclohexyl, or cyclopentyl or cyclohexyl which are substituted by 1 to 3 methyl groups, unsubstituted phenyl or phenyl which is substituted by sulfo, nitro, fluoro, chloro, methyl, methoxy, N-methylamino or N-ethylamino, N,N-dimethylamino or N,N-diethylamino, acetylamino, propionylamino, benzoylamino, methoxycarbonyl, ethoxycarbonyl or methylsulfonyl, unsubstituted 1- or 2-naphthyl or 1- or 2-naphthyl which is substituted by sulfo, nitro and/or chloro, or benzyl, thiophenyl, furyl or pyridinyl which are unsubstituted or substituted by methyl, methoxy, sulfo, fluoro and/or chloro.

3. A compound according to claim 1 or 2, wherein R, R₁, R₃ and R₅ are each independently of one another hydrogen, unsubstituted C₁-C₄alkyl or C₁-C₄alkyl which is substituted by hydroxy or sulfato, cyclohexyl, unsubstituted phenyl or benzyl, or phenyl or benzyl which are substituted by sulfo, fluoro, chloro, methyl and/or methoxy, or 1- or 2-naphthyl, thiophenyl, furyl or pyridinyl which are unsubstituted or substituted by sulfo.

4. A compound according to any one of claims 1 to 3, wherein R₁, R₃ and R₅ are each hydrogen.

5. A compound according to any one of claims 1 to 4, wherein A is a C₂-C₄alkylene radical which is unsubstituted or substituted by hydroxy, sulfo, sulfato, methoxy, carboxy or sulfophenyl, -CH₂-CH₂-Q'-CH₂-CH₂-, wherein Q' is -O-, -S-, -SO₂-, -NH- or -N(CH₃)-, an unsubstituted or sulfo-substituted 1,3- or 1,4-phenylene radical, a cyclohexylene radical which is unsubstituted or substituted by 1 to 3 methyl groups, or a C₁-C₃alkylene-phenylene or C₁-C₂alkylene-phenylene-C₁-C₂alkylene radical, wherein the phenylene moiety is unsubstituted or substituted by methyl, methoxy, chloro or sulfo.

6. A compound according to any one of claims 1 to 5, wherein A is C₂-C₄alkylene which is unsubstituted or substituted by hydroxy, sulfo, sulfato, methoxy, carboxy or sulfophenyl.

7. A compound according to any one of claims 1 to 6, wherein A is 1,2-ethylene or 1,2- or 1,3-propylene which is unsubstituted or substituted by hydroxy or sulfato.

8. A compound according to any one of claims 1 to 7, wherein X is the group -0- or -N(R₃)-, wherein R₃ is hydrogen, C₁-C₄alkyl, cyclohexyl, unsubstituted phenyl or benzyl, or phenyl or benzyl which are substituted by sulfo, chloro, methyl and/or methoxy, or unsubstituted or sulfo-substituted 1- or 2-naphthyl.

9. A compound according to claim 8, wherein X is the -NH- group.

10. A compound according to any one of claims 1 to 9, wherein n is 0.

11. A compound according to any one of claims 1 to 10, wherein p is 1 and Z is hydroxy or C₁-C₄alkyl, particularly hydroxy.

12. A compound according to any one of claims 1 to 11, wherein R₂ is chloro.

13. A compound according to any one of claims 1 to 12, wherein R₄ is C₁-C₄alkyl, cyclohexyl, unsubstituted phenyl or benzyl, or phenyl or benzyl which are substituted by sulfo, chloro, methyl and/or methoxy.

14. A compound according to any one of claims 1 to 13, wherein Q is a functional group of formula 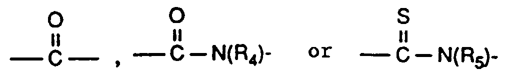 wherein R₄ is as defined in claim 13 and R₅ is as defined in claim 3.

15. A compound according to any one of claims 1 to 14, wherein Q is a functional group of formula 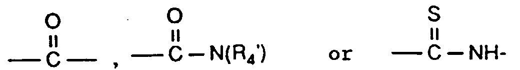 wherein R₄' is methyl, ethyl, phenyl or benzyl.

16. A compound according to claim 1 of formula 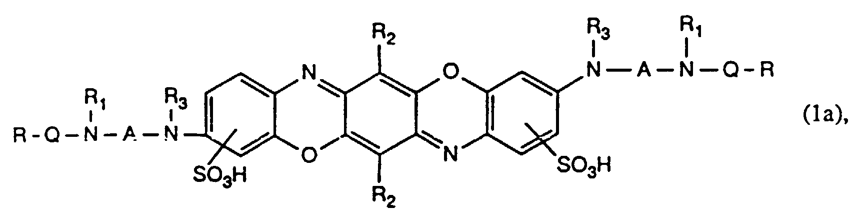 wherein R, R₁ and R₃ are each independently of one another hydrogen, unsubstituted C₁-C₄alkyl or C₁-C₄alkyl which is substituted by hydroxy, sulfo, sulfato, chloro, cyano or acetoxy and/or, with the exception of methyl, may be interrupted by a group -0-, unsubstituted cyclopentyl or cyclohexyl, or cyclopentyl or cyclohexyl which are substituted by 1 to 3 methyl groups, unsubstituted phenyl or phenyl which is substituted by sulfo, nitro, fluoro, chloro, methyl, methoxy, N-methylamino or N-ethylamino, N,N-dimethylamino or N,N-diethylamino, acetylamino, propionylamino, benzoylamino, methoxycarbonyl, ethoxycarbonyl or methylsulfonyl, unsubstituted 1- or 2-naphthyl or 1- or 2-naphthyl which is substituted by sulfo, nitro and/or chloro, or benzyl, thiophenyl, furyl or pyridinyl which are unsubstituted or substituted by methyl, methoxy, sulfo, fluoro and/or chloro,
R₂ is chloro or bromo, A is a C₂-C₄alkylene radical which is unsubstituted or substituted by hydroxy, sulfo, sulfato, methoxy, carboxy or sulfophenyl, or is
-CH₂-CH₂-Q'-CH₂-CH₂-, wherein Q' is -O-, -S-, -SO₂-, -NH- or -N(CH₃)-, and Q is a functional group of formula 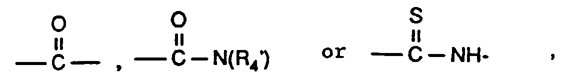 wherein R₄' is C₁-C₄alkyl, cyclohexyl, unsubstituted phenyl or benzyl, or phenyl or benzyl which are substituted by sulfo, chloro, methyl and/or methoxy, with the proviso that R is not methyl or phenyl if Q is a group of formula 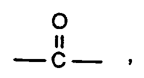 R₁ is hydrogen, X is -NR₃- and A is 1,2-ethylene, 1,3-propylene or 1,4-butylene.

17. A compound according to claim 1 of formula 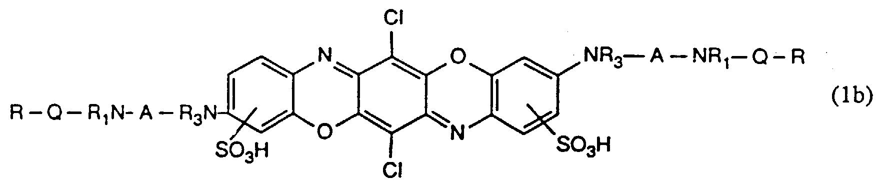 wherein R, R₁ and R₃ are each independently of one another hydrogen, unsubstituted C₁-C₄alkyl or C₁-C₄alkyl which is substituted by hydroxy or sulfato, cyclohexyl, unsubstituted phenyl or benzyl, or phenyl or benzyl which are substituted by sulfo, chloro, methyl and/or methoxy, or unsubstituted or sulfo-substituted 1- or 2-naphthyl, A is a 1,2-ethylene or 1,2- or 1,3-propylene radical which is unsubstituted or substituted by hydroxy or sulfato, and Q is a radical of formula 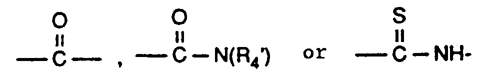 wherein R₄' is methyl, ethyl, phenyl or benzyl, with the proviso that R is not methyl or phenyl if Q is a group of formula 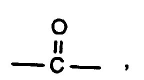 R₁ is hydrogen and A is 1,2-ethylene or 1,3-propylene.

18. A compound according to claim 17, wherein R₁ and R₃ are each hydrogen.

19. A process for the preparation of a compound of formula (1) according to claim 1, which comprises reacting a compound of formula 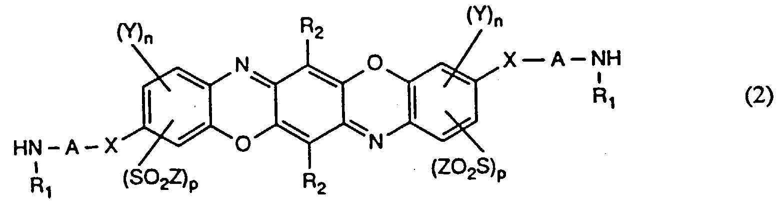 with a compound of formula
R-Q-Hal (3),
wherein R, R₁, R₂, A, Q, X, Y, Z, n and p are each as defined in claim 1 and Hal is halogen, preferably chloro.

20. Use of a compound of formula (1) as dye for dyeing or printing nitrogen-containing and, in particular, cellulosic fibre materials.

21. Use according to claim 20, which comprises dyeing blends of synthetic fibres and cellulosic fibre materials, especially polyester/cotton blends, in the presence of a disperse dye for the polyester fibres, under the dyeing conditions for polyester fibres.

22. A process for dyeing polyester/cotton blends with disperse and direct dyes, which comprises using a compound of formula (1) according to claim 1 as dye, in a one-step, single bath process in addition to the disperse dyes, and dyeing from an aqueous liquor in the temperature range from 100 to 150°C, preferably from 120 to 130°C, and in the pH range from 4 to 7.5.

## Claims (Claims for the following Contracting State(s): ES)

1. A process for the preparation of a compound of formula 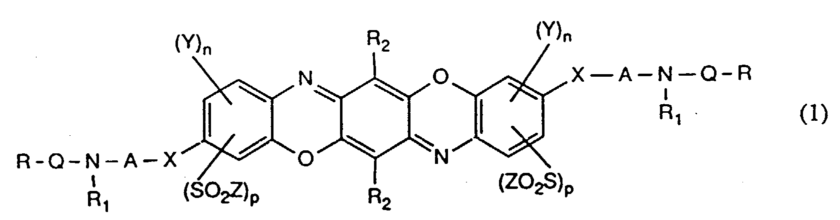 wherein
A is an unsubstituted or substituted alkylene, cycloalkylene, arylene or aralkylene radical,
X is -O-, -S- or -NR₃-, wherein R₃ is hydrogen or an unsubstituted or substituted alkyl, cycloalkyl, aryl, aralkyl or heterocyclic radical,
Y is halogen, C₁-C₄alkyl, C₁-C₄alkoxy, sulfo or carboxy,
n is 0 or 1,
Z is hydroxy or unsubstituted or substituted alkyl, aryl or aralkyl, p is 0 or 1,
R₂ is chloro or bromo,
R and R₁ are each independently of the other hydrogen or an unsubstituted or substituted alkyl, cycloalkyl, aralkyl, aryl, thiophenyl, furyl or pyridinyl radical,
Q is a functional group of formula 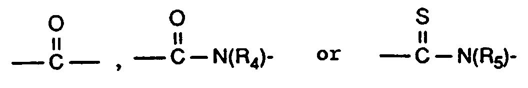
R₄ is an unsubstituted or substituted alkyl, cycloalkyl, aralkyl, aryl or heterocyclic radical, and R₅ is hydrogen or independently has the meaning of R₄, or wherein the radicals -N(R₄)- and/or -N(R₅)- are each independently of the other a bivalent 5- to 7-membered aliphatic heterocycle, with the proviso that R is not methyl, β-carboxyethyl, phenyl, 2-carboxyphenyl or 3,4,5,6-tetrachloro-2-carboxyphenyl if Q is a group of formula 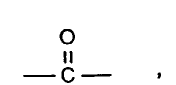 R₁ is hydrogen, X is -NR₃- and A is 1,2-ethylene, 1,3-propylene, 1,4-butylene, cyclopentylene or cyclohexylene, which comprises reacting a compound of formula 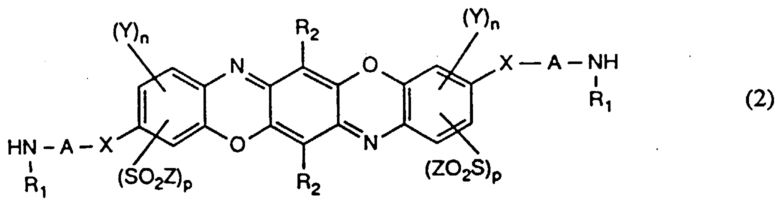 with a compound of formula
R-Q-Hal (3)
wherein R, R₁, R₂, A, Q, X, Y, Z, n and p are each as defined under formula (1) and Hal is halogen, preferably chloro.

2. A process according to claim 1, which comprises using a compound of formula (2) and a compound of formula (3) wherein R, R₁, R₃ and R₅ are each independently of one another hydrogen, unsubstituted C₁-C₄alkyl or C₁-C₄alkyl which is substituted by hydroxy, sulfo, sulfato, chloro, cyano or acetoxy and/or, with the exception of methyl, may be interrupted by a group -0-, unsubstituted cyclopentyl or cyclohexyl, or cyclopentyl or cyclohexyl which are substituted by 1 to 3 methyl groups, unsubstituted phenyl or phenyl which is substituted by sulfo, nitro, fluoro, chloro, methyl, methoxy, N-methylamino or N-ethylamino, N,N-dimethylamino or N,N-diethylamino, acetylamino, propionylamino, benzoylamino, methoxycarbonyl, ethoxycarbonyl or methylsulfonyl, unsubstituted 1- or 2-naphthyl or 1- or 2-naphthyl which is substituted by sulfo, nitro and/or chloro, or benzyl, thiophenyl, furyl or pyridinyl which are unsubstituted or substituted by methyl, methoxy, sulfo, fluoro and/or chloro.

3. A process according to claim 1 or 2, which comprises using a compound of formula (2) and a compound of formula (3) wherein R, R₁, R₃ and R₅ are each independently of one another hydrogen, unsubstituted C₁-C₄alkyl or C₁-C₄alkyl which is substituted by hydroxy or sulfato, cyclohexyl, unsubstituted phenyl or benzyl, or phenyl or benzyl which are substituted by sulfo, fluoro, chloro, methyl and/or methoxy, or 1- or 2-naphthyl, thiophenyl, furyl or pyridinyl which are unsubstituted or substituted by sulfo.

4. A process according to any one of claims 1 to 3, which comprises using a compound of formula (2) and a compound of formula (3) wherein R₁, R₃ and R₅ are each hydrogen.

5. A process according to any one of claims 1 to 4, which comprises using a compound of formula (2) wherein A is a C₂-C₄alkylene radical which is unsubstituted or substituted by hydroxy, sulfo, sulfato, methoxy, carboxy, or sulfophenyl, -CH₂-CH₂-Q'-CH₂-CH₂-, wherein Q' is -O-, -S-, -SO₂-, -NH- or -N(CH₃)- an unsubstituted or sulfo-substituted 1,3- or 1,4-phenylene radical, a cyclohexylene radical which is unsubstituted or substituted by 1 to 3 methyl groups, or a C₁-C₃alkylenephenylene or C₁-C₂alkylene-phenylene-C₁-C₂alkylene radical, wherein the phenylene moiety is unsubstituted or substituted by methyl, methoxy, chloro or sulfo.

6. A process according to any one of claims 1 to 5, which comprises using a compound of formula (2) wherein A is C₂-C₄alkylene which is unsubstituted or substituted by hydroxy, sulfo, sulfato, methoxy, carboxy or sulfophenyl.

7. A process according to any one of claims 1 to 6, which comprises using a compound of formula (2) wherein A is 1,2-ethylene or 1,2- or 1,3-propylene which is unsubstituted or substituted by hydroxy or sulfato.

8. A process according to any one of claims 1 to 7, which comprises using a compound of formula (2) wherein X is the group -0- or -N(R₃)-, wherein R₃ is hydrogen, C₁-C₄alkyl, cyclohexyl, unsubstituted phenyl or benzyl, or phenyl or benzyl which are substituted by sulfo, chloro, methyl and/or methoxy, or unsubstituted or sulfo-substituted 1- or 2-naphthyl.

9. A process according to claim 8, which comprises using a compound of formula (2) wherein X is the -NH- group.

10. A process according to any one of claims 1 to 9, which comprises using a compound of formula (2) wherein n is 0.

11. A process according to any one of claims 1 to 10, which comprises using a compound of formula (2) wherein p is 1 and Z is hydroxy or C₁-C₄alkyl, particularly hydroxy.

12. A process according to any one of claims 1 to 11, which comprises using a compound of formula (2) wherein R₂ is chloro.

13. A process according to any one of claims 1 to 12, which comprises using a compound of formula (3) wherein R₄ is C₁-C₄alkyl, cyclohexyl, unsubstituted phenyl or benzyl, or phenyl or benzyl which are substituted by sulfo, chloro, methyl and/or methoxy.

14. A process according to any one of claims 1 to 13, which comprises using a compound of formula (3) wherein Q is a functional group of formula 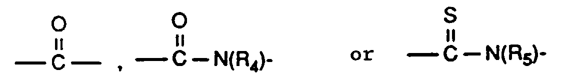 wherein R₄ is as defined in claim 13 and R₅ is as defined in claim 3.

15. A process according to any one of claims 1 to 14, which comprises using a compound of formula (3) wherein Q is a functional group of formula 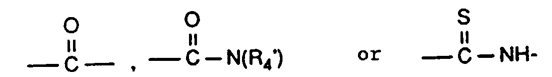 wherein R₄' is methyl, ethyl, phenyl or benzyl.

16. A process according to claim 1, which comprises reacting a compound of formula 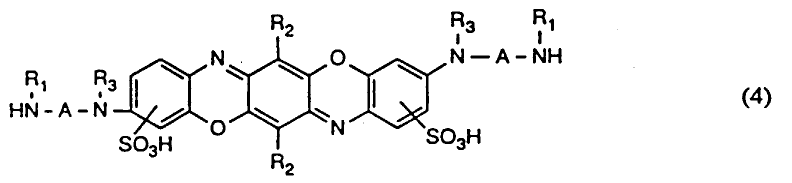 with a compound of formula (3), wherein Hal is halogen, preferably chloro, R, R₁ and R₃ are each independently of one another hydrogen, unsubstituted C₁-C₄alkyl or C₁-C₄alkyl which is substituted by hydroxy, sulfo, sulfato, chloro, cyano or acetoxy and/or, with the exception of methyl, may be interrupted by a group -0-, unsubstituted cyclopentyl or cyclohexyl, or cyclopentyl or cyclohexyl which are substituted by 1 to 3 methyl groups, unsubstituted phenyl or phenyl which is substituted by sulfo, nitro, fluoro, chloro, methyl, methoxy, N-methylamino or N-ethylamino, N,N-dimethylamino or N,N-diethylamino, acetylamino, propionylamino, benzoylamino, methoxycarbonyl, ethoxycarbonyl or methylsulfonyl, unsubstituted 1- or 2-naphthyl or 1- or 2-naphthyl which is substituted by sulfo, nitro and/or chloro, or benzyl, thiophenyl, furyl or pyridinyl which are unsubstituted or substituted by methyl, methoxy, sulfo, fluoro and/or chloro,
R₂ is chloro or bromo, A is a C₂-C₄alkylene radical which is unsubstituted or substituted by hydroxy, sulfo, sulfato, methoxy, carboxy or sulfophenyl, or is
-CH₂-CH₂-Q'-CH₂-CH₂-, wherein Q' is -O-, -S-, -SO₂-, -NH- or -N(CH₃)-, and Q is a functional group of formula 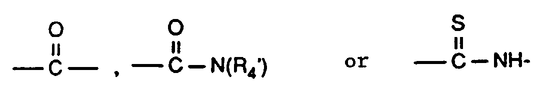 wherein R₄' is C₁-C₄alkyl, cyclohexyl, unsubstituted phenyl or benzyl, or phenyl or benzyl which are substituted by sulfo, chloro, methyl and/or methoxy, with the proviso that R is not methyl or phenyl if Q is a group of formula 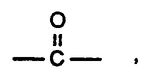 R₁ is hydrogen, X is -NR₃- and A is 1,2-ethylene, 1,3-propylene or 1,4-butylene.

17. A process according to claim 1, which comprises reacting a compound of formula 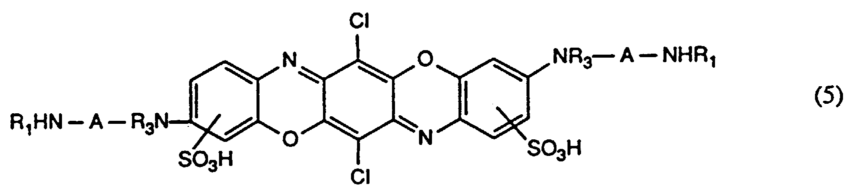 with a compound of formula (3), wherein Hal is halogen, preferably chloro, R, R₁ and R₃ are each independently of one another hydrogen, unsubstituted C₁-C₄alkyl or C₁-C₄alkyl which is substituted by hydroxy or sulfato, cyclohexyl, unsubstituted phenyl or benzyl, or phenyl or benzyl which are substituted by sulfo, chloro, methyl and/or methoxy, or unsubstituted or sulfo-substituted 1- or 2-naphthyl, A is a 1,2-ethylene or 1,2- or 1,3-propylene radical which is unsubstituted or substituted by hydroxy or sulfato, and Q is a radical of formula 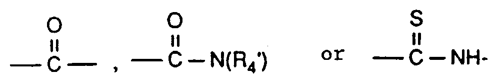 wherein R₄' is methyl, ethyl, phenyl or benzyl, with the proviso that R is not methyl or phenyl if Q is a group of formula 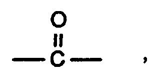 R₁ is hydrogen and A is 1,2-ethylene or 1,3-propylene.

18. A process according to claim 17, which comprises using a compound of formula (5) wherein R₁ and R₃ are each hydrogen.

19. Use of a compound of formula (1) obtained according to claim 1 as dye for dyeing or printing nitrogen-containing and, in particular, cellulosic fibre materials.

20. Use according to claim 19, which comprises dyeing blends of synthetic fibres and cellulosic fibre materials, especially polyester/cotton blends, in the presence of a disperse dye for the polyester fibres, under the dyeing conditions for polyester fibres.

21. A process for dyeing polyester/cotton blends with disperse and direct dyes, which comprises using a compound of formula (1) obtained according to claim 1 as dye, in a one-step, single bath process in addition to the disperse dyes, and dyeing from an aqueous liquor in the temperature range from 100 to 150°C, preferably from 120 to 130°C, and in the pH range from 4 to 7.5.

## Revendications (Revendications pour l'(les) Etat(s) contractant(s) suivant(s): BE, CH, DE, FR, GB, IT, LI)

1. Composés de formule 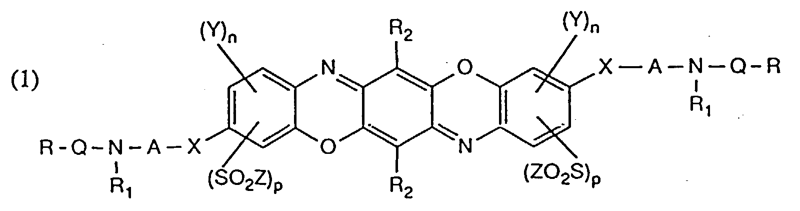 dans laquelle
A représente un résidu alkylène, cycloalkylène, arylène ou aralkylène éventuellement substitués,
X représente un groupe -O-, -S- ou -NR₃-, où R₃ représente un atome d'hydrogène ou un groupe alkyle, cycloalkyle, aryle, aralkyle ou hétérocyclique éventuellement substitués,
Y est un atome d'halogène, un groupe alkyle en C₁₋₄, alcoxy en C₁₋₄, sulfo ou carboxy,
n est un nombre égal à 0 ou 1,
Z est un résidu hydroxy ou un groupe alkyle, aryle ou aralkyle éventuellement substitués,
p vaut 0 ou 1,
R₂ représente un atome de chlore ou de brome,
R et R₁ représentent indépendamment l'un de l'autre un atome d'hydrogène ou un résidu alkyle, cycloalkyle, aralkyle, aryle, thiophényle, furyle, pyridinyle éventuellement substitués,
Q est un groupe fonctionnel de formule 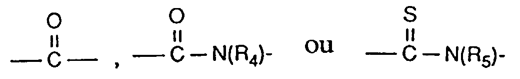
R₄ est un résidu alkyle, cycloalkyle, aralkyle, aryle ou hétérocyclique éventuellement substitués, et
R₅ est un atome d'hydrogène ou a la signification de R₄, indépendamment de celui-ci, les résidus -N(R₄)- et/ou -N(R₅)- représentant indépendamment l'un de l'autre un hétérocycle aliphatique bivalent comportant de 5 à 7 chaînons, avec la restriction que, lorsque Q représente un groupe de formule -C(O)-, R ne soit pas un groupe méthyle, β-carboxyéthyle, phényle, 2-carboxyphényle ou 3,4,5,6-tétrachloro-2-carboxyphényle,
R₁ est un atome d'hydrogène,
X un groupe -NR₃- et
A un groupe 1,2-éthylène, 1,3-propylène, 1,4-butylène, cyclopentylène ou cyclohexylène.

2. Composés conformes à la revendication 1, caractérisés en ce que R, R₁, R₃, et R₅ représentent de préférence indépendamment l'un de l'autre un atome d'hydrogène, un résidu alkyle en C₁₋₄ non substitué ou portant un substituant hydroxy, sulfo, sulfato, chloro, cyano ou acétoxy, et, à l'exception d'un groupe méthyle, pouvant être interrompu par un groupe -O-, un groupe cyclopentyle ou cyclohexyle non substitué ou portant de 1 à 3 substituants méthyle, un résidu phényle non substitué ou portant un résidu sulfo, nitro, fluoro, chloro, méthyle, méthoxy, N-méthylamino ou N-éthylamino, N,N-diméthylamino ou N,N-diéthylamino, acétylamino, propionylamino, benzoylamino, méthoxycarbonyle, éthoxycarbonyle ou méthylsulfonyle, un groupe 1-naphtyle ou 2-naphtyle non substitué ou portant un groupe sulfo, nitro et/ou chloro, ou encore un résidu thiophényle, furyle ou pyridinyle, benzyle non substitué ou substitué par un groupe méthyle, méthoxy, sulfo, fluoro et/ou chloro.

3. Composés conformes à la revendication 1 ou 2, caractérisés en ce que R, R₁, R₃, et R₅ représentent indépendamment l'un de l'autre de préférence un atome d'hydrogène, un groupe alkyle en C₁₋₄ non substitué ou portant un substituant hydroxy ou sulfato, un groupe cyclohexyle, un groupe phényle ou benzyle non substitué ou portant un substituant sulfo, fluoro, chloro, méthyle et/ou méthoxy, un groupe 1-naphtyle ou 2-naphtyle non substitué ou portant un résidu sulfo, un groupe thiophényle, furyle ou pyridinyle.

4. Composés conformes à une des revendications 1 à 3, caractérisés en ce que R₁, R₃ et R₅ représentent chacun un atome d'hydrogène.

5. Composés conformes à une des revendications 1 à 4, caractérisés en ce que A représente un résidu alkylène en C₂₋₄ non subtitué ou portant un groupe hydroxy, sulfo, sulfato, méthoxy, carboxy ou sulfophényle, un groupe
-CH₂-CH₂-Q'-CH₂-CH₂-, où Q' est un groupe -O-, -S-, -SO₂-, -NH- ou -N(CH₃)-, un résidu 1,3-phénylène ou 1,4-phénylène non substitué ou sulfoné, un résidu cyclohexylène non substitué ou portant de 1 à 3 groupes méthyle, ou encore un résidu (alkylène en C₁₋₃)-phénylène ou (alkylène en C₁₋₂)-phénylène-(alkylène en C₁₋₂)- dans lequel le résidu phénylène peut être substitué par un groupe méthyle, méthoxy, chloro ou sulfo.

6. Composés conformes à une des revendications 1 à 5, caractérisés en ce que A représente un résidu alkylène en C₂₋₄ non substitué ou portant un substituant hydroxy, sulfo, sulfato, méthoxy, carboxy ou sulfophényle.

7. Composés conformes à une des revendications 1 à 6, caractérisés en ce que A est un groupe 1,2-éthylène, 1,2-propylène ou 1,3-propylène substitués par un résidu hydroxy ou sulfato.

8. Composés conformes à une des revendications 1 à 7, caractérisés en ce que X représente un groupe -O- ou -N(R₃)-, où R₃ représente un atome d'hydrogène, un groupe alkyle en C_{1-4,} cyclohexyle, benzyle ou phényle non substitués ou substitués par un résidu sulfo, chloro, méthyle et/ou méthoxy, ou un groupe l-naphtyle ou 2-naphtyle non substitué ou sulfoné.

9. Composés conformes à la revendication 8, caractérisés en ce que X représente un groupe -NH-.

10. Composés conformes à une des revendications 1 à 9 caractérisés en ce que n vaut 0.

11. Composés conformes à une des revendications 1 à 10, caractérisés en ce que p vaut 1 et Z représente un résidu hydroxy ou alkyle en C₁₋₄, en particulier un résidu hydroxy.

12. Composés conformes à une des revendications 1 à 11, caractérisés en ce que R₂ est un atome de chlore.

13. Composés conformes à une des revendications 1 à 12, caractérisés en ce que R₄ représente un résidu alkyle en C₁₋₄, cyclohexyle ou un résidu benzyle ou phényle non substitués ou portant un substituant sulfo, chloro, méthyle et/ou méthoxy.

14. Composés conformes à une des revendications 1 à 13, caractérisés en ce que Q est un groupe fonctionnel de formule 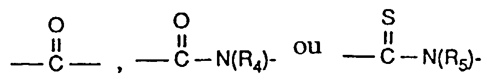 où R₄ a la signification indiquée dans la revendication 13 et R₅ a la signification indiquée dans la revendication 3.

15. Composés conformes à une des revendications 1 à 14, caractérisés en ce que Q est un groupe fonctionnel de formule 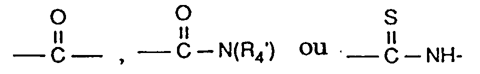 où R₄' représente un groupe méthyle, éthyle, phényle ou benzyle.

16. Composés conformes à la revendication 1 de formule 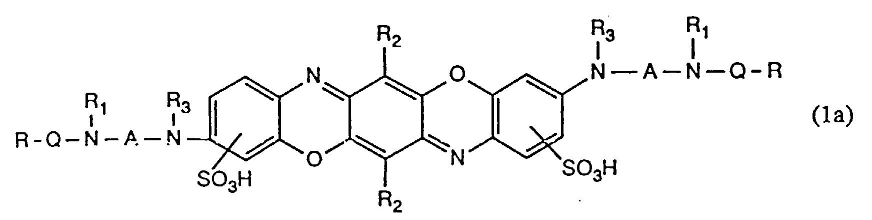 dans laquelle R, R₁ et R₃ représentent indépendamment l'un de l'autre un atome d'hydrogène, un groupe alkyle en C₁₋₄ non substitué ou portant un substituant hydroxy, sulfo, sulfato, chloro, cyano ou acétoxy et/ou interrompu, sauf en ce qui concerne un groupe méthyle, par un groupe -O-, un groupe cyclopentyle ou cyclohexyle non substitué ou portant 1 à 3 substituants méthyle, un groupe phényle non substitué ou portant un groupe sulfo, nitro, fluoro, chloro, méthyle, méthoxy, N-méthylamino ou N-éthy-lamino, N,N-diméthylamino ou N,N-diéthylamino, acétylamino, propionylamino, benzoylamino, méthoxycarbonyle, éthoxycarbonyle ou méthylsulfonyle, un groupe 1-naphtyle ou 2-naphtyle non substitué ou portant un groupe sulfo, nitro et/ou chloro, ou encore un groupe pyridinyle, furyle, thiophényle ou benzyle non substitué ou portant un substituant méthyle, méthoxy, sulfo, fluoro et/ou chloro,
R₂ représente un atome de chlore ou de brome,
A représente un résidu alkylène en C₂₋₄ non substitué ou portant un résidu hydroxy, sulfo, sulfato, méthoxy, carboxy ou sulfophényle, ou un groupe -CH₂-CH₂-Q'-CH₂-CH₂- où Q' est un groupe -O-, -S-, -SO₂-, -NH- ou -N(CH₃)-, et
Q représente un groupe fonctionnel de formule 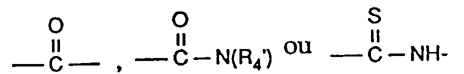 où R₄' représente un groupe alkyle en C₁₋₄, cyclohexyle ou un groupe benzyle ou phényle substitués par un résidu sulfo, chloro, méthyle et/ou méthoxy, à condition que R ne soit pas un groupe méthyle ou phényle lorsque Q représente un groupe de formule -(C=O)-
R₁ représente un atome d'hydrogène,
X est un groupe -NR₃-, et
A un groupe 1,2-éthylène, 1,3-propylène ou 1,4-butylène.

17. Composés conformes à la revendication 1 de formule 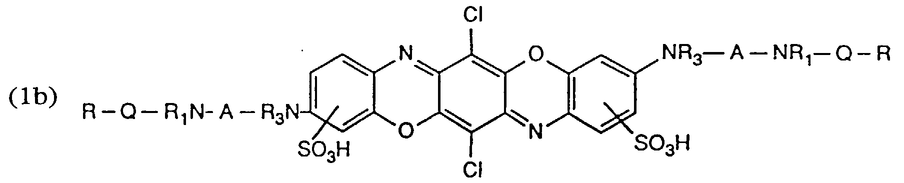 dans laquelle R, R₁ et R₃ représentent indépendamment l'un de l'autre un atome d'hydrogène, un groupe alkyle en C₁₋₄ non substitué ou portant un résidu hydroxy ou sulfato, un groupe cyclohexyle, un groupe phényle ou benzyle non substitués ou portant un résidu sulfo, chloro, méthyle et/ou méthoxy, ou encore un groupe 1-naphtyle ou 2-naphtyle non substitué ou sulfoné,
A représente un groupe 1,2-éthylène ou 1,2-propylène ou 1,3-propylène non substitués ou portant un résidu hydroxy ou sulfato, et Q représente un résidu de formule 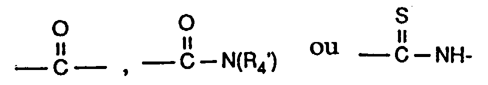 où R₄' représente un groupe méthyle, éthyle, benzyle ou phényle, à condition que R ne soit pas un groupe méthyle ou phényle lorsque Q représente un groupe de formule -(C=O)-
R₁ représente un atome d'hydrogène, et
A un groupe 1,2-éthylène ou 1,3-propylène.

18. Composés conformes à la revendication 17 dans lesquels R₁ et R₃ représentent chacun un atome d'hydrogène.

19. Procédé de préparation de composés de formule (1) conformes à la revendication 1, caractérisé en ce que l'on fait réagir un composé de formule 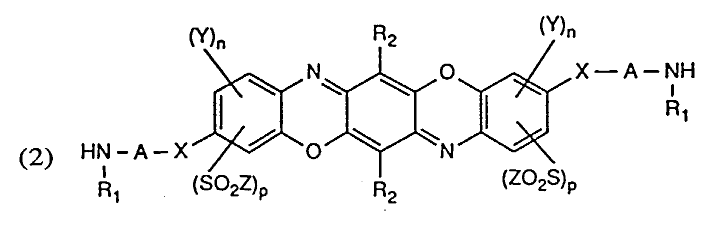 avec un composé de formule
(3) R-Q-Hal
dans laquelle R, R₁, R₂, A, Q, X, Y, Z, n et p ont la signification indiquée dans la revendication 1 et Hal représente un atome d'halogène, de préférence un atome de chlore.

20. Utilisation des composés de formule (1) en tant que colorants pour la teinture et l'impression de matériaux fibreux contenant des atomes d'azote et en particulier de matériaux fibreux cellulosiques.

21. Utilisation conforme à la revendication 20, caractérisée en ce que l'on teint des mélanges de fibres composés de fibres synthétiques et de matériaux fibreux cellulosiques, en particulier des tissus mélangés de type polyster/coton, en présence d'un colorant de dispersion pour fibres de polyester dans des conditions de teinture de fibres de polyester.

22. Procédé de teinture de tissus mélangés de type polyester/coton par des colorants de dispersion et des colorants directs, caractérisé en ce que, dans un procédé en une seule étape et à bain unique, on utilise comme colorants, en plus des colorants de dispersion, des composés de formule (1) conformes à la revendication 1, et en ce que la teinture se fait dans un bain aqueux à une température comprise entre 100 et 150 °C, de préférence entre 120 et 130 °C, et à un pH compris entre 4 et 7,5.

## Revendications (Revendications pour l'(les) Etat(s) contractant(s) suivant(s): ES)

1. Procédé de préparation de composés de formule 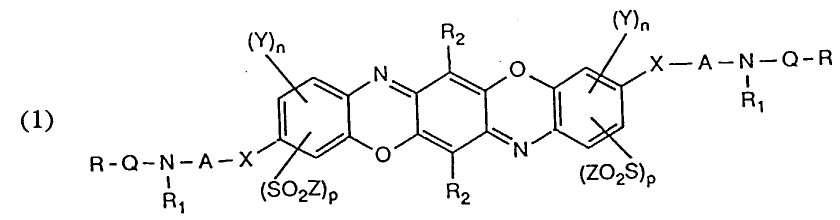 dans laquelle
A représente un résidu alkylène, cycloalkylène, arylène ou aralkylène éventuellement substitués,
X représente un groupe -O-, -S- ou -NR₃-, où R₃ représente un atome d'hydrogène ou un groupe alkyle, cycloalkyle, aryle, aralkyle ou hétérocyclique éventuellement substitués,
Y est un atome d'halogène, un groupe alkyle en C₁₋₄, alcoxy en C₁₋₄, sulfo ou carboxy,
n est un nombre égal à 0 ou 1,
Z est un résidu hydroxy ou un groupe alkyle, aryle ou aralkyle éventuellement substitués,
p vaut 0 ou 1,
R₂ représente un atome de chlore ou de brome,
R et R₁ représentent indépendamment l'un de l'autre un atome d'hydrogène ou un résidu alkyle, cycloalkyle, aralkyle, aryle, thiophényle, furyle, pyridinyle éventuellement substitués,
Q est un groupe fonctionnel de formule 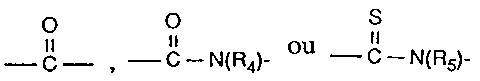
R₄ est un résidu alkyle, cycloalkyle, aralkyle, aryle ou hétérocyclique éventuellement substitués, et
R₅ est un atome d'hydrogène ou a la signification de R₄, indépendamment de celui-ci, les résidus -N(R₄)- et/ou -N(R₅)- représentant indépendamment l'un de l'autre un hétérocycle aliphatique bivalent comportant de 5 à 7 chaînons, avec la restriction que, lorsque Q représente un groupe de formule -C(O)-, R ne soit pas un groupe méthyle, β-carboxyéthyle, phényle, 2-carboxyphényle ou 3,4,5,6-tétrachloro-2-carboxyphényle,
R₁ est un atome d'hydrogène,
X un groupe -NR₃- et
A un groupe 1,2-éthylène, 1,3-propylène, 1,4-butylène, cyclopentylène ou cyclohexylène,
caractérisé en ce que l'on fait réagir un composé de formule 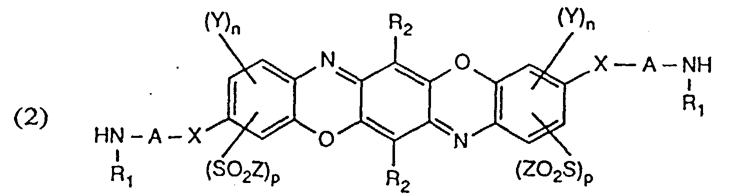 avec un composé de formule
(3) R-Q-Hal
dans laquelle R, R₁, R₂, A, Q, X, Y, Z, n et p ont la signification indiquée pour la formule (1) et Hal représente un atome d'halogène, de préférence un atome de chlore.

2. Procédé conforme à la revendication 1, caractérisé en ce que l'on utilise un composé de formule (2) et un composé de formule (3) dans lesquelles R, R₁, R₃, et R₅ représentent indépendamment l'un de l'autre un atome d'hydrogène, un résidu alkyle en C₁₋₄ non substitué ou portant un substituant hydroxy, sulfo, sulfato, chloro, cyano ou acétoxy, et, à l'exception d'un groupe méthyle, pouvant être interrompu par un groupe - O-, un groupe cyclopentyle ou cyclohexyle non substitué ou portant de 1 à 3 substituants méthyle, un résidu phényle non substitué ou portant un résidu sulfo, nitro, fluoro, chloro, méthyle, méthoxy, N-méthylamino ou N-éthylamino, N,N-diméthylamino ou N,N-diéthyl-amino, acétylamino, propionylamino, benzoylamino, méthoxycarbonyle, éthoxycarbonyle ou méthylsulfonyle, un groupe 1-naphtyle ou 2-naphtyle non substitué ou portant un groupe sulfo, nitro et/ou chloro, ou encore un résidu thiophényle, furyle ou pyridinyle, benzyle non substitué ou substitué par un groupe méthyle, méthoxy, sulfo, fluoro et/ou chloro.

3. Procédé conforme à la revendication 1 ou 2, caractérisé en ce que l'on utilise un composé de formule (2) et un composé de formule (3) dans lesquelles R, R₁, R₃ et R₅ représentent indépendamment l'un de l'autre de préférence un atome d'hydrogène, un groupe alkyle en C₁₋₄ non substitué ou portant un substituant hydroxy ou sulfato, un groupe cyclohexyle, un groupe phényle ou benzyle non substitué ou portant un substituant sulfo, fluoro, chloro, méthyle et/ou méthoxy, un groupe 1-naphtyle ou 2-naphtyle non substitué ou portant un résidu sulfo, un groupe thiophényle, furyle ou pyridinyle.

4. Procédé conforme à une des revendications 1 à 3, caractérisé en ce que l'on utilise un composé de formule (2) et un composé de formule (3) dans lesquelles R₁, R₃ et R₅ représentent chacun un atome d'hydrogène.

5. Procédé conforme à une des revendications 1 à 4, caractérisé en ce que l'on utilise un composé de formule (2) dans laquelle A représente un résidu alkylène en C₂₋₄ non subtitué ou portant un groupe hydroxy, sulfo, sulfato, méthoxy, carboxy ou sulfophényle, un groupe -CH₂-CH₂-Q'-CH₂-CH₂-, où Q' est un groupe -O-, -S-, -SO₂-, -NH- ou -N(CH₃)-, un résidu 1,3-phénylène ou 1,4-phénylène non substitué ou sulfoné, un résidu cyclohexylène non substitué ou portant de 1 à 3 groupes méthyle, ou encore un résidu (alkylène en C₁₋₃)-phénylène ou (alkylène en C₁₋₂)-phénylène-(alkylène en C₁₋₂)- dans lequel le résidu phénylène peut être substitué par un groupe méthyle, méthoxy, chloro ou sulfo.

6. Procédé conforme à une des revendications 1 à 5, caractérisé en ce que l'on utilise un composé de formule (2) dans laquelle A représente un résidu alkylène en C₂₋₄ non substitué ou portant un substituant hydroxy, sulfo, sulfato, méthoxy, carboxy ou sulfophényle.

7. Procédé conforme à une des revendications 1 à 6, caractérisé en ce que l'on utilise un composé de formule (2) dans laquelle A est un groupe 1,2-éthylène, 1,2-propylène ou 1,3-propylène substitués par un résidu hydroxy ou sulfato.

8. Procédé conforme à une des revendications 1 à 7, caractérisé en ce que l'on utilise un composé de formule (2) dans laquelle X représente un groupe -O- ou -N(R₃)-, où R₃ représente un atome d'hydrogène, un groupe alkyle en C_{1-4,} cyclohexyle, benzyle ou phényle non substitués ou substitués par un résidu sulfo, chloro, méthyle et/ou méthoxy, ou un groupe 1-naphtyle ou 2-naphtyle non substitué ou sulfoné.

9. Procédé conforme à la revendication 8, caractérisé en ce que l'on utilise un composé de formule (2) dans laquelle X représente un groupe -NH-.

10. Procédé conforme à une des revendications 1 à 9, caractérisé en ce que l'on utilise un composé de formule (2) dans laquelle n vaut 0.

11. Procédé conforme à une des revendications 1 à 10, caractérisé en ce que l'on utilise un composé de formule (2) dans lequel p vaut 1 et Z représente un résidu hydroxy ou alkyle en C₁₋₄, en particulier un résidu hydroxy.

12. Procédé conforme à une des revendications 1 à 11, caractérisé en ce que l'on utilise un composé de formule (2) dans laquelle R₂ est un atome de chlore.

13. Procédé conforme à une des revendications 1 à 12, caractérisé en ce que l'on utilise un composé de formule (3) dans laquelle R₄ représente un résidu alkyle en C₁₋₄, cyclohexyle ou un résidu benzyle ou phényle non substitués ou portant un substituant sulfo, chloro, méthyle et/ou méthoxy.

14. Procédé conforme à une des revendications 1 à 13, caractérisé en ce que l'on utilise un composé de formule (3) dans lequel Q est un groupe fonctionnel de formule 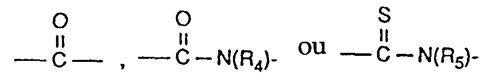 où R₄ a la signification indiquée dans la revendication 13 et R₅ a la signification indiquée dans la revendication 3.

15. Procédé conforme à une des revendications 1 à 14, caractérisé en ce que l'on utilise un composé de formule (3) dans laquelle Q est un groupe fonctionnel de formule 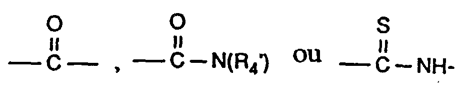 où R₄' représente un groupe méthyle, éthyle, phényle ou benzyle.

16. Procédé conforme à la revendication 1, caractérisé en ce que l'on fait réagir un composé de formule 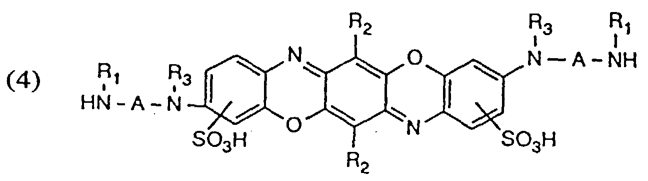 avec un composé de formule (3) où Hal représente un atome d'halogène, de préférénce un atome de chlore, R, R₁ et R₃ représentent indépendamment l'un de l'autre un atome d'hydrogène, un groupe alkyle en C14 non substitué ou portant un substituant hydroxy, sulfo, sulfato, chloro, cyano ou acétoxy et/ou interrompu, sauf en ce qui concerne un groupe méthyle, par un groupe -O-, un groupe cyclopentyle ou cyclohexyle non substitué ou portant 1 à 3 substituants méthyle, un groupe phényle non substitué ou portant un groupe sulfo, nitro, fluoro, chloro, méthyle, méthoxy, N-méthylamino ou N-éthylamino, N,N-diméthylamino ou N,N-diéthylamino, acétylamino, propionylamino, benzoylamino, méthoxycarbonyle, éthoxycarbonyle ou méthylsulfonyle, un groupe 1-naphtyle ou 2-naphtyle non substitué ou portant un groupe sulfo, nitro et/ou chloro, ou encore un groupe pyridinyle, furyle, thiophényle ou benzyle non substitué ou portant un substituant méthyle, méthoxy, sulfo, fluoro et/ou chloro,
R₂ représente un atome de chlore ou de brome,
A représente un résidu alkylène en C₂₋₄ non substitué ou portant un résidu hydroxy, sulfo, sulfato, méthoxy, carboxy ou sulfophényle, ou un groupe -CH₂-CH₂-Q'-CH₂-CH₂- où Q' est un groupe -O-, -S-, -SO₂-, -NH- ou -N(CH₃)-, et
Q représente un groupe fonctionnel de formule 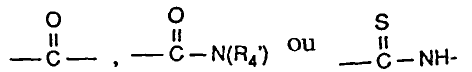 où R₄' représente un groupe alkyle en C₁₋₄, cyclohexyle ou un groupe benzyle ou phényle substitués par un résidu sulfo, chloro, méthyle et/ou méthoxy, à condition que R ne soit pas un groupe méthyle ou phényle lorsque Q représente un groupe de formule -(C=O)-
R₁ représente un atome d'hydrogène,
X est un groupe -NR₃-, et
A un groupe 1,2-éthylène, 1,3-propylène ou 1,4-butylène.

17. Procédé conforme à la revendication 1, caractérisé en ce que l'on fait réagir un composé de formule 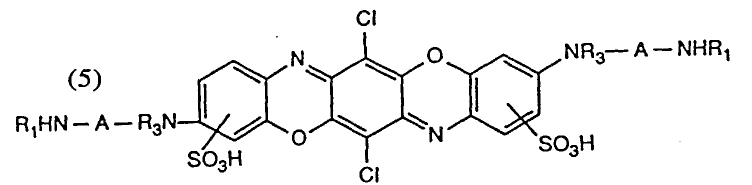 avec un composé de formule (3) où Hal représente un atome d'halogène, de préférénce un atome de chlore, R, R₁ et R₃ représentent indépendamment l'un de l'autre un atome d'hydrogène, un groupe alkyle en C₁₋₄ non substitué ou portant un résidu hydroxy ou sulfato, un groupe cyclohexyle, un groupe phényle ou benzyle non substitués ou portant un résidu sulfo, chloro, méthyle et/ou méthoxy, ou encore un groupe 1-naphtyle ou 2-naphtyle non substitué ou sulfoné,
A représente un groupe 1,2-éthylène ou 1,2-propylène ou 1,3-propylène non substitués ou portant un résidu hydroxy ou sulfato, et Q représente un résidu de formule 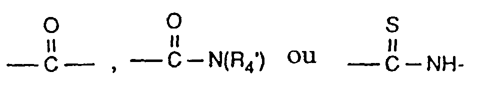 où R₄' représente un groupe méthyle, éthyle, benzyle ou phényle, à condition que R ne soit pas un groupe méthyle ou phényle lorsque Q représente un groupe de formule -(C=O)-
R₁ représente un atome d'hydrogène, et
A un groupe 1,2-éthylène ou 1,3-propylène.

18. Procédé conforme à la revendication 17 caractérisé en ce que l'on utilise un composé de formule (5) dans laquelle R₁ et R₃ représentent chacun un atome d'hydrogène.

19. Utilisation des composés de formule (1) obtenus conformément à la revendication 1 en tant que colorants pour la teinture et l'impression de matériaux fibreux contenant des atomes d'azote et en particulier de matériaux fibreux cellulosiques.

20. Utilisation conforme à la revendication 19, caractérisée en ce que l'on teint des mélanges de fibres composés de fibres synthétiques et de matériaux fibreux cellulosiques, en particulier des tissus mélangés de type polyster/coton, en présence d'un colorant de dispersion pour fibres de polyester dans des conditions de teinture de fibres de polyester.

21. Procédé de teinture de tissus mélangés de type polyester/coton par des colorants de dispersion et des colorants directs, caractérisé en ce que, dans un procédé en une seule étape et à bain unique, on utilise comme colorants, en plus des colorants de dispersion, des composés de formule (1) obtenus conformément à la revendication 1, et en ce que la teinture se fait dans un bain aqueux à une température comprise entre 100 et 150°C, de préférence entre 120 et 130 °C, et à un pH compris entre 4 et 7,5.
